Europäisches Patentamt

European Patent Office

Office européen des brevets

(11) Veröffentlichungsnummer: **0 190 677**
**A2**

(12) **EUROPÄISCHE PATENTANMELDUNG**

(21) Anmeldenummer: 86101272.2

(22) Anmeldetag: 31.01.86

(51) Int. Cl.⁴: **B 60 R 1/10**

Ein Antrag gemäss Regel 88 EPÜ auf Hinzufügung von Teilen der Beschreibung liegt vor. Über diesen Antrag wird im Laufe des Verfahrens von der Prüfungsabteilung eine Entscheidung getroffen werden.

(30) Priorität: 05.02.85 DE 3503784
08.03.85 DE 3508191
22.03.85 DE 3510342
28.03.85 DE 3511287
28.12.85 DE 3546246

(43) Veröffentlichungstag der Anmeldung:
13.08.86 Patentblatt 86/33

(84) Benannte Vertragsstaaten:
AT BE CH DE FR GB IT LI LU NL SE

(71) Anmelder: Ambros, Richard
Eichendorffweg 8
D-8960 Kempten(DE)

(72) Erfinder: Ambros, Richard
Eichendorffweg 8
D-8960 Kempten(DE)

(54) Vorwärtsblickspiegel, speziell für Kraftfahrzeuge, zur Umlenkung der Blickrichtung auf ein vor dem Betrachter liegendes, durch einen Gegenstand verdecktes Blickfeld.

(57) Die Erfindung betrifft einen mit einem Rückblickspiegel (10) kombinierten Vorwärtsblickspiegel (1, 2), über den ein in Ausscherrichtung (a) durch die Windschutzscheibe (101) hindurch gerichteter Blick eines Fahrers (3) seitlich vom Fahrzeug (13) in Fahrtrichtung umgelenkt wird.

Dabei ist die Spiegeleinheit (20) schwenkbar mittels einer Fahrertüre (103) an einem Halter (12c) und ausschwenkbar über den Halter seitlich an einem vorderen Kotflügel gelagert, wobei der Rückblickspiegel wie üblich durch das Seitenfenster (102) hindurch einsehbar ist.

Für eine gewölbte Ausblickscheibe (26) des Vorwärtsblickspiegels ist ein schwenkbar um eine vertikale Achse (32) gelagertes Scheibenwischerblatt (34) vorgesehen, das die ganze Ausblickscheibe sauberwischt und in seiner Ruheschwenkstellung (R) berührungsfrei über einer am Rand der Scheibe eingeformten Mulde (58) gehalten ist.

Außerdem ist eine Wasserversorgungseinrichtung (77, 78 u. 80) und eine automatisch funktionierende Regenwasserauffangeinrichtung (160, 162) in der Spiegeleinheit untergebracht.

Ein doppelwandiges Vordach über der Ausblickscheibe sorgt für eine ideale Bewässerung derselben besonders bei Regenwetter, wobei überschüssiges Regenwasser ungenutzt abläuft.

Auch über der Einblickscheibe (25) und dem Rückblickspiegel ist ein den Regen durchlassendes und den Schnee abhaltendes, kleineres Vordach vorgesehen.

./...

Fig. 1

0190677

VORWÄRTSBLICKSPIEGEL, SPEZIELL FÜR KRAFTFAHRZEUGE, ZUR UMLEN-
KUNG DER BLICKRICHTUNG AUF EIN VOR DEM BETRACHTER BEFINDLICHES,
DURCH EINEN GEGENSTAND (VORAUSFAHRENDES FAHRZEUG) VERDECKTES
BLICKFELD

In der Hauptanmeldung P 34 42 078.9 (G 84 33 731.1) ist bereits
ein mit einem Rückblickspiegel kombinierter Vorwärtsblickspiegel dargestellt u. beschrieben, wobei der im wesentlichen aus
einer den Blick des Betrachters zurückwerfenden Einblickspiegelfläche u. einer den Blick wieder nach vorne umlenkenden Ausblickspiegelfläche bestehende Vorwärtsblickspiegel so am Fahrzeug angeordnet ist, daß die Einblickspiegelfläche in Ausscherrichtung durch die untere Partie der Windschutzscheibe hindurch
einsehbar ist, während die Ausblickspiegelfläche in Fahrtrichtung gesehen hinter dem seitlich am Fahrzeug angebrachten Rückblickspiegel plaziert ist.
Die beiden Spiegelflächen sind dabei ebenso wie der Rückblickspiegel als übliche Spiegeleinsätze mit Flanschbefestigung ausgebildet u. von außen her auf einen in Durchblickrichtung etwas
schräg zulaufenden Gehäuserahmen in Rechteckform aufgeschraubt.
Der Gehäuserahmen weist zu diesem Zweck zwei Aussparungen auf,
in welche die Spiegeleinsätze des Vorwärtsblickspiegels eingesetzt sind.
Für die Befestigung des Rückblickspiegels sind am Gehäuserahmen
des Vorwärtsblickspiegels ein oberer u. ein unterer Steg angebracht, auf deren Stirnflächen der Rückblickspiegel aufgesetzt
ist. Dadurch entsteht zwischen dem Ausblickspiegeleinsatz des
Vorwärtsblickspiegels u. dem Rückblickspiegel ein nutzbarer
Raum, der in vorliegender Zusatzanmeldung für den Antrieb eines
Scheibenwischers mit Wasserversorgungs- u. Regenwasserauffang-
Einrichtung (ReWa- Anlage) für die Ausblickscheibe des Vorwärtsblickspiegels genutzt ist.
Um die Spiegelflächen des Vorwärtsblickspiegels vor Staub und
Wasser zu schützen ist in oben erwähnter Hauptanmeldung auch
schon an durchsichtige Wandungen in Einblick- u. Ausblickrichtung des Vorwärtsblickspiegels gedacht, so daß zwischen den
Spiegelflächen eine hermetisch abgeschlossene Kammer gebildet
ist, die in Durchblickrichtung durchschaubar ist.
Die erfindungsgemäßen Merkmale dieser Hauptanmeldung sind neidlos anerkannt u. auch in vorliegender Zusatzanmeldung genutzt, wobei hier auch schon daran gedacht ist den in obiger Hauptanmeldung erwähnten und dargestellten Halter, über den die Spiegeleinheit am vorderen Kotflügel des Kraftfahrzeuges befestigt ist, so am Kotflügel zu lagern, daß er automatisch ausschwenkbar ist sobald die Verriegelung der Fronthaube gelöst ist, so daß die Fronthaube geöffnet werden kann ohne daß die Spiegeleinheit erst von Hand abgeschwenkt werden muß.

Dabei ist der Halter mit zwei parallel zueinander versetzten Achsen ausgestattet, wovon die eine Achse vertikal nach unten ragt und zur Schwenklagerung des Halters dient, während die andere Achse vertikal nach oben ragt und zur Schwenklagerung der Spiegeleinheit dient.

Das Abschwenken der Spiegeleinheit um die nach oben ragende Achse des Halters geschieht automatisch durch das Öffnen der Fahrer- bzw. Beifahrertüre über einen an der Türe angelenkten Gelenkhebel, der die Spiegeleinheit mit abschwenkt und somit verhindert, daß die Türe gegen den Rückblickspiegel der Spiegeleinheit anschlägt, während das seitliche Aus- u. Einschwenken des Halters um seine nach unten ragende Achse in vorliegender Zusatzanmeldung ebenfalls automatisch erfolgt und zwar über je einen Getriebemotor für die zweckmäßigerweise auf beiden Seiten des Kraftfahrzeuges angeordneten Spiegeleinheiten, wobei die Getriebemotoren die Spiegeleinheiten nach außen schwenken sobald die Verriegelung der Fronthaube gelöst ist, so daß nunmehr die Fronthaube geöffnet werden kann.

Wird die Fronthaube wieder zugeklappt so werden die beiden Spiegeleinheiten automatisch über dieselben Getriebemotoren wieder nach innen in Gebrauchslage geschwenkt, was abgesehen davon, daß man das Aus- u. Einschwenken der Spiegeleinheiten nicht von Hand besorgen muß , einen sehr effektvollen Eindruck auf Damen macht, was ja auch ein Vorteil sein kann.

Zumindest hat es den Vorteil, daß man sich nicht dauernd den einzigen Nachteil gegenüber einem Fahrzeug ohne Vorwärtsblickspiegel anhören muß, was einem selbst dann, wenn man sich der Folgen bewußt ist, welche ein unangebrachtes Ausscheren aufgrund einer Fehleinschätzung der Verkehrslage ohne Vorwärtsblickspiegel haben kann, allmählich aber sicher auf die Nerven fällt.

Das automatische Aus- u. Einschwenken der Spiegeleinheiten ist ja relativ einfach und auch preiswert zu lösen, da ein Getriebe-

motor noch zu den Artikeln gehört, die relativ preiswert sind.
Bei der Lösung des Aus- u. Einschwenkproblems ist wie schon beim
Scheibenwischerantrieb auf einen Kurbeltrieb zurückgegriffen,
wobei die von einer Kurbelscheibe bzw. einem Kurbelbolzen erzeugte Schwenkbewegung einer mit einer in Umfangsrichtung verlaufenden Ringnut versehenen Schwenkscheibe durch einen Microschalter jeweils nach einer halben Schwenkbewegung bzw. einer
halben Umdrehung der Kurbelscheibe unterbrochen wird.
Die Ringnut, in die ein Mitnehmerbolzen für die Schwenkbetätigung des Halters ragt, schwenkt also bei Inbetriebsetzung des
Getriebemotors einmal in die eine Drehrichtung und wieder zurück und nach erneuter Inbetriebsetzung des Getriebemotors in
die andere Drehrichtung und wieder zurück, wobei beide Schwenkbewegungen zusammengenommen dem von der Kurbelscheibe erzeugten
Schwenkbereich der Ringnut entsprechen.
Während nun die eine Schwenkbewegung das Ausschwenken der Spiegeleinheit bzw. des Halters bewirkt, wird durch die andere
Schwenkbewegung das Einschwenken der Spiegeleinheit bewirkt.
Dabei ist für die Lagefixierung der Spiegeleinheit in den beiden Endschwenkstellungen eine übliche Einrastvorkehrung getroffen, da ja die Schwenkscheibe bzw. deren Ringnut nur das Aus-
oder Einschwenken der Spiegeleinheit bewerkstelligt und dann
sofort wieder im Leerlauf in Ausgangslage zurückschwenkt, so
daß die Spiegeleinheit auch jederzeit von Hand ein- u. ausschwenkbar ist ohne daß vorher der Antriebs- bzw. Schwenkmechanismus abgekuppelt werden muß. '
Da die Ringnut durch das Zurückschwenken in ihre Ausgangslage
lediglich die Schwenkbarkeit der Spiegeleinheit von Hand wiederherstellt, während die Spiegeleinheit bzw. deren Halter in
der jeweiligen Endschwenkstellung einrastet und dort verbleibt,
muß der gesamte Schwenkwinkel der Ringnut natürlich größer sein
wie der Schwenkwinkel des Halters, nämlich etwas größer wie
zweimal so groß, damit die Schwenkfreiheit des Halters bei Handbetätigung auch gewährleistet ist.
Für die eigentliche Schwenkbegrenzung des Halters ist eine weitere Ringnut mit dazugehörigem Anschlagbolzen vorgesehen, welche
unmittelbar zwischen ▬▬▬▬▬▬▬ Halter ▬▬▬▬ *und*
▬▬▬▬▬▬▬ Lagergehäuse angeordnet und entsprechend stabil ausgebildet sind, so daß der Schwenkmechanismus selbst durch
äußere Gewalteinwirkung nicht beschädigt werden kann.

In vorliegender Zusatzanmeldung ist auch an die zweckmäßige Nutzung des Regens zum Sauberwischen der Ausblickscheibe des Vorwärtsspiegels gedacht, wobei die Vorteile eines doppelwandigen Vordaches über der Ausblickscheibe genutzt sind.

Das direkte Aufprasseln des Regens auf eine Scheibe verringert ja deren Durchschaubarkeit wesentlich mehr, als wie wenn die gleiche Menge Regenwasser gemächlich die Scheibe entlang herunterrieseln würde, wobei noch zu erproben wäre, ob für den Auslauf des Wassers nur eine oder besser mehrere Auslaufbohrungen über der Ausblickscheibe angeordnet werden sollen oder ob gar ein Auslaufschlitz am günstigsten ist.

Der Einfachheit halber ist in der Folge nur von einer Auslaufbohrung die Rede.

Den Regen durch das Vordach gänzlich von der Scheibe fernzuhalten wäre jedoch nachteilig sobald man gezwungen ist den Scheibenwischer zwecks Reinigung der Scheibe einzusetzen, weil man hier ja froh ist wenn es regnet, um die Scheibe ohne Einsatz der Wasserversorgungseinrichtung sauberwischen zu können.

Um dieses Problem möglichst vorteilhaft zu lösen ist über einer zylinder- oder kegelförmig gewölbten Ausblickscheibe ein doppelwandiges Vordach angeordnet, wobei die untere Wandung dieses Vordaches von einem direkt am Gehäuserahmen der Spiegeleinheit angeformten Vordachboden gebildet ist, der unmittelbar über der Ausblickscheibe eine Auffangwanne für das Regenwasser aufweist, während die obere Wandung dieses Vordaches von einem Gehäusedeckel gebildet ist, der gleichzeitig den Schwenkantrieb für das Scheibenwischerblatt abdeckt.

Damit nun auch Regenwasser auf die Ausblickscheibe gelangt sind über der Ausblickscheibe mehrere Schlitze oder Öffnungen im Gehäusedeckel angebracht, durch die es hindurchregnen kann.

Die Schlitze überdecken dabei einen kreisbogenförmigen Schlitz, der für die Durchführung eines Wischbügels, an dem das Scheibenwischerblatt befestigt ist, im Vordachboden angebracht ist.

Je nach Fahrgeschwindigkeit gelangt nun das Regenwasser zum einen Teil auf den Vordachboden vor dem kreisbogenförmigen Schlitz und zum anderen Teil in die Auffangwanne über der Ausblickscheibe, wobei sich bei höherer Fahrgeschwindigkeit entsprechend dem flacheren Einfallwinkel der Regentropfen automatisch mehr Wasser in der Wanne ansammelt.

Während nun der erstere Teil des Regenwassers über die Vorderkante des kreisbogenförmigen Schlitzes hinweg vor der Ausblickscheibe nach unten tropft, läuft das Regenwasser von der Wanne
aus durch eine mehr oder weniger schräg angeordnete Auslaufbohrung am Grund der Wanne vor die Ausblickscheibe, um entlang deren Außenfläche gemächlich nach unten zu rieseln.
Die Schlitze im Gehäusedeckel sind so bemessen, daß sie bei
schwachem Regen, wo der Einsatz der Wasserversorgungseinrichtung
noch nicht erforderlich ist, etwas mehr Regen durchlassen als
ohne Vordach auf die Scheibe prasseln würde. Entsprechend ist
auch der Querschnitt der Auslauf- bohrung gewählt, wobei die
Auslauf- bohrung etwas größer dimensioniert sein sollte, also
in etwa so, daß das Regenwasser auch noch abläuft, wenn es genau
soviel regnet als einem zwecks Sauberhaltung der Scheibe gerade
recht ist. Mehr Wasser würde ja die Durchschaubarkeit der Scheibe nur mindern.
Regnet es nun noch stärker, dann steigt der Wasserspiegel in der
Auffangwanne an und das überschüssige Regenwasser läuft nun durch
einen Überlaufschlitz in der gehäuseseitigen Wandung der Auffangwanne auf die Decke des Gehäuserahmens der Spiegeleinheit über
und von da aus durch ein vertikales Ablaufloch in Längsrichtung
der Rahmenwandung nach unten von der Spiegeleinheit ab.
Das Ablaufloch ist so bemessen, daß auf alle Fälle mehr Wasser
vom entsprechenden Deckenteil des Gehäuserahmens nach unten ablaufen könnte, als durch den Überlaufschlitz in der Wanne auf
das vom Gehäusedeckel abgedeckte Deckenteil des Gehäuserahmens
überlaufen kann.
Angenommen das Wasser steigt nun bei einem Wolkenbruch beispielsweise noch höher an weil durch die Schlitze im Gehäusedeckel
mehr Wasser in die Auffangwanne gelangt als von der Wanne ab-
und überlaufen kann, dann läuft das Wasser halt über die vordere, kreisbogenförmige Wandung der Wanne, die außen genau bündig
zur Ausblickscheibe anschließt, auf den höher gelegenen Teil des
Vordachbodens und durch den kreisbogenförmigen Schlitz im Vordachboden hindurch nach unten entlang der Ausblickscheibe ab.
Da rein gefühlsmäßig bei weitem nicht soviel Regen durch die
Schlitze im Gehäusedeckel auf den Vordachboden fallen kann wie
Wasser durch den kreisbogenförmigen Schlitz abläuft, besteht
also keine Gefahr, daß Wasser über oder in den Antriebsraum der
Spiegeleinheit gelangt. Vorsorglich können aber auch hier Ablaufvorkehrungen getroffen werden.

Damit sich vor der Auslauf- bohrung über der Ausblickscheibe
kein Luftstau durch den Fahrtwind bildet, der unter Umständen
das Auslaufen des Wassers aus der Auffangwanne negativ beeinflussen könnte, ist auf der Unterseite des Vordachbodens ein
keilförmig ausgebildeter Luftstromabweiser angeformt, über den
vor der Bohrung ein Unterdruck oder eine Art Injektorwirkung
erzeugt werden sollte, damit bei höherer Fahrgeschwindigkeit
wenn möglich  etwas mehr Wasser aus der Bohrung austritt.
Dessen günstigste Lage und Ausbildung und auch die günstigste
Schräglage der Auslaufbohrung müssen natürlich Versuchsergebnisse erbringen falls auf diese Art und Weise überhaupt etwas
zu erreichen ist bzw. nicht eine bessere Lösung gefunden wird.
Strömungstechnisch dürfte es Vorteile bringen, wenn man die Ausblickscheibe leicht kegelförmig statt zylinderförmig gewölbt
ausbildet- mit der Verjüngung nach unten selbstverständlich.


Regenwasser hat man ja früher als Ersatz für destilliertes Wasser notfalls sogar zum Nachfüllen von Batterien verwenden können,
wozu heute nicht mehr geraten wird. Ob nun die chemischen Verunreinigungen teilweise schon bei der Verdunstung des Wassers mit
aufsteigen oder sich erst in das Regenwasser mischen, wenn es
regnet, sei dahingestellt.
Zum Sauberwischen von Scheiben jedoch ist das Regenwasser auch
heute noch zu gebrauchen und auch wert, daß man es auffängt, und
wenn da diverse Wasch- und Reinigungsmittel, sowie Arzneimittel
und radioaktive Kleinstteilchen mit dabei sind, dann ist es vielleicht sogar noch geeigneter zum Säubern, wie früher.
Deshalb ist in vorliegender Zusatzanmeldung auch daran gedacht,
das Regenwasser aufzufangen und in den Wasserbehälter der Wasserversorgungseinrichtung zu leiten, damit auch bei Nieselwetter u.
feucht- schmutzigen Straßenverhältnissen ausreichend Wasser zum
Säubern der Ausblickscheibe vorhanden ist und zumindest in warmen Jahreszeiten der Wasserbehälter nicht dauernd nachgefüllt
werden muß. In Ländern wo es viel regnet dürfte es ja mehr regnen, wie nieseln, so daß ein Nachfüllen des Behälters in warmen
Jahreszeiten hier wahrscheinlich gar nicht mehr erforderlich ist,
sofern das Fahrzeug regelmäßig gefahren wird.
Trotzdem sollte man natürlich sicherheitshalber auch für andere
Zwecke stets eine Flasche voll Wasser im Fahrzeug mitführen.
Es ist ja ungefährlich auch für Kinder, wenn's kein Reg.- W. ist.

- 7 -  0190677

Um also das Regenwasser für die Tage aufzufangen, wo man auf die
Scheibenwascheinrichtung angewiesen ist, ist im Gehäusedeckel
bündig mit dessen Oberfläche eine Klappe eingesetzt, die automatisch über einen Hubmagneten öffnet  sobald der Scheibenwischer
betätigt wird, was ja heißt, daß es regnet.
Wird jedoch zusätzlich die Wasserversorgung über die Wasserpumpe
in Betrieb gesetzt, dann bleibt die Klappe geschlossen bzw.
schließt wieder, da dies ja ein Zeichen dafür ist, daß es zu wenig regnet und die Strassen schmutzig sind.
Man betätigt die Klappe also automatisch so wie es richtig ist
mit, ohne daß man dabei etwas denken muß, was natürlich heißt,
daß man Zeit hat an etwas anderes zu denken bzw. sich auf etwas
anderes zu konzentrieren, wie z. B. auf den Straßenverkehr.
Unter dem Gehäusedeckel bzw. der Klappe ist ja nun der obere Gehäusesteg angeordnet, so daß man sich auch hier wiederum die Doppelwandigkeit, die ja nun schon mal vorhanden ist, zunutze machen
kann. Hat man nämlich schon mal einen Boden und eine Decke, dann
brauchen nur noch ein paar Wände eingezogen werden und schon hat
man eine Wasserkammer.
Die Wände sind hier von einer Umrandung gebildet, welche sowohl
auf dem oberen  Gehäusesteg als auch auf der Unterseite des Gehäusedeckels gleich verlaufend angeformt ist und zwar bündig mit
deren Stirnseiten zur bereits vorhandenen Auflagefläche zwischen
Gehäuse und Gehäusedeckel, so daß eine einzige plane und einigermaßen dichte Auflagefläche zwischen den beiden Umrandungen sowie
Gehäuse und Deckel gebildet ist.
Bei Inbetriebnahme des Scheibenwischers- was ja heißt, daß es
regnet- läuft also nun das Regenwasser über die vom Hubmagneten
automatisch geöffnete Klappe zunächst einmal in die geschilderte
Wasserkammer, von der aus das Wasser aber gleich wieder durch
eine am Grund der Kammer angeordnete  Ablauföffnung nach außen
abläuft, damit die Kammer erst einmal vorgereinigt wird, falls
sich vorher etwas Staub darin angesammelt haben sollte.
Erst wenn es stärker regnet und sich die Kammer füllt, weil
durch die geöffnete Klappe mehr Regen in die Kammer eindringt,
als durch die Ablauföffnung auslaufen kann, dann läuft das Regenwasser über einen Überlauf in den Wasserbehälter der Wasserversorgungseinrichtung.
Wenn es noch stärker regnet oder der Wasserbehälter schon voll
ist, so daß der Wasserspiegel in der Kammer weiter ansteigt,

dann läuft das Wasser halt über reichlich bemessene Überlaufschlitze, die in der äußeren Deckelumrandung vorgesehen und etwas höher angeordnet sind, wie der Überlauf für den Wasserbehälter, ungenutzt nach außen ab.

Ist der Wasserbehälter voll, dann läuft er natürlich über, was
aber überhaupt nicht nachteilig ist.

Das Wasser tritt dann oben aus dem Entlüftungsloch aus und läuft
aufgrund seiner Adhäsionskraft so sicher wie in einer Wasserleitung der Behälterwandung entlang nach unten und sammelt sich in
einer Vertiefung im unteren Gehäusesteg, in die der Behälter eingesetzt ist. Damit sich das Wasser dort sammeln und auch ablaufen kann sind entweder im Behälterboden od. in der Vertiefung
radial nach innen verlaufende Rillen angebracht, so daß das Wasser nach innen unter den Behälterboden und von dort aus durch
ein Ablaufloch im unteren Gehäusesteg ablaufen kann.

So bleibt also auch der Behälter immer sauber. Nach ähnlichem
Vorbild können auch weitere Ablaufprobleme gelöst werden, da hier
die Möglichkeit mutwillig von außen in die Spiegeleinheit hineinspritzen zu können weitgehendst unterbunden ist.

Damit Fremdkörper, die trotz aller Vorsorge in den Behälter gelangen könnten, die Zuführung des Regenwassers über eine Wasserpumpe zur Ausblickscheibe nicht verhindern können, ist keine übliche Spritzdüse am Austrittsende der Wasserleitung zur Ausblickscheibe vorgesehen wie beispielsweise bei der Befeuchtung von
Windschutzscheiben, wo bei hoher Fahrgeschwindigkeit der Wasserstrahl oft nicht mal in Scheibenwischerhöhe reicht, während er
bei zu niedriger Fahrgeschwindigkeit fast schon in Dachhöhe
reicht, sondern ein Rückschlagventil, das auch einstellbar ausgeführt werden kann, so daß die Wassermenge regulierbar ist.

Über das Rückschlagventil, bei dem bekannterweise der Pumpendruck gegen die Vorspannkraft einer Feder den Ventilsitz und
damit den Durchlaß öffnet, gelangt nun das Regenwasser in die
Auffangwanne über der Ausblickscheibe und über die Auslaufbohrung vor die Ausblickscheibe, wo es dann von oben herab gemächlich und ohne zu spritzen die Scheibe entlang nach unten rieselt. Das ist besser wie Spritzen, weil ja ein Wasserstrahl die
Sicht erheblich mindert, so schön er auch ist an einem Springbrunnen. Die Gefahr einer Verstopfung ist bei einem Rückschlagventil auch ausgeschlossen, so daß sich ein Sieb am Einlauf zum
Wasserbehälter wahrscheinlich erübrigt.

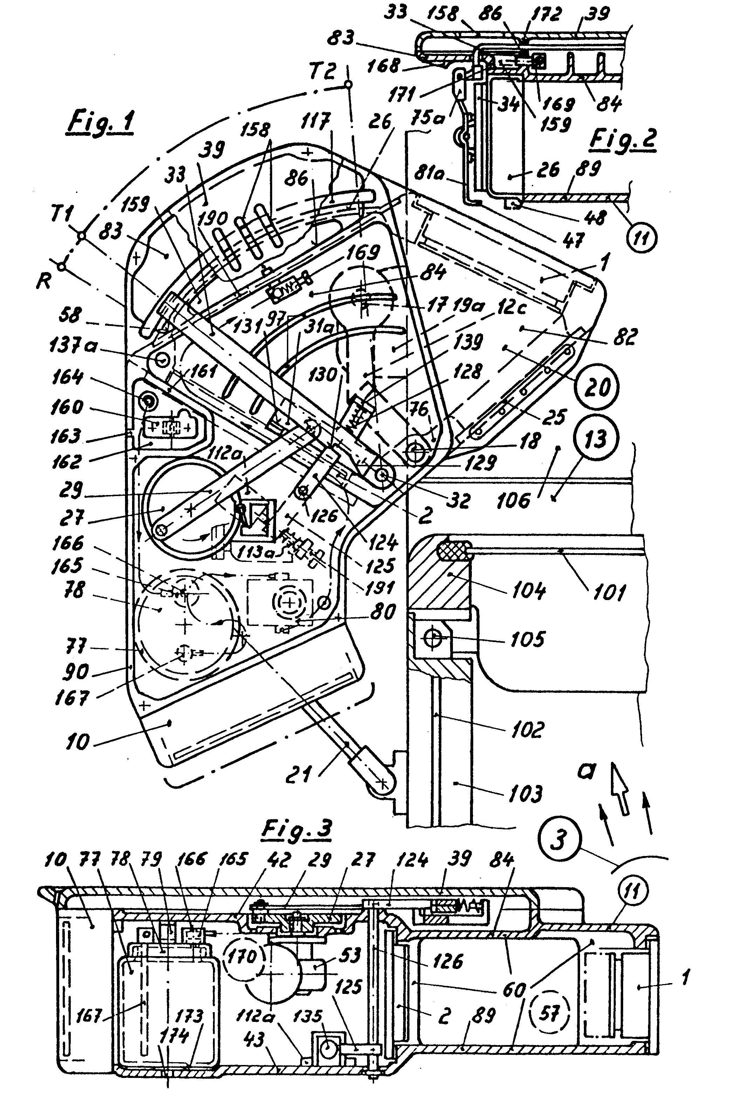

In den Darstellungen Fig. 1 bis 8 ist eine auf der Fahrerseite angeordnete Spiegeleinheit für ein linksgesteuertes Kraftfahrzeug dargestellt, wobei die Darstellung der Einzelheiten genauso für die Beifahrerseite als auch für ein rechtsgesteuertes Fahrzeug zutrifft.

Bei einer Spiegeleinheit auf der Beifahrerseite sind lediglich die Spiegeleinsätze in ihrer Schräglage etwas anders angeordnet, so daß auch die Gehäuseform eine etwas andere Außenkontur aufweist, jedoch ohne wesentliche Änderung in der Formgebung.

Die Befestigung·der Spiegeleinheit auf der Beifahrerseite sollte zweckmäßigerweise der auf der Fahrerseite entsprechen, so daß also beide Rückblickspiegel der Spiegeleinheiten durch die Seitenfenster 102 hindurch einsehbar sind, während die Vorwärtsblickspiegel unterhalb der Augenhöhe des Fahrers möglichst dicht über der Fronthaube des Fahrzeuges angeordnet und schräg durch die Windschutzscheibe 101 hindurch einsehbar sind.

Durch diese Anordnung ist am ehesten garantiert, daß man sich beim Gebrauch des einen Spiegels der Spiegeleinheit vom anderen Spiegel nicht ablenken oder irritieren läßt, da Vor- u. Rückblickspiegel auf beiden Seiten durch die Dachstützen 104 voneinander getrennt sind - und ein Blick durch die Windschutzscheibe dem Fahrer ganz automatisch signalisiert, daß er nach vorne schaut, so daß er also jederzeit voll orientiert ist, von welchem Spiegel er gerade Gebrauch macht.

Die Anordnung der Rückblickspiegel so, daß sie durch das Seitenfenster hindurch einsehbar sind, hat sowohl auf der Fahrer- als auch auf der Beifahrerseite den Vorteil, daß der Fahrer gezwungen ist, beim Gebrauch des Rückblickspiegels seinen Blick zur Seite lenken zu müssen, wodurch die Gefahr ein nebenherfahrendes Fahrzeug zu übersehen weitgehendst gemindert ist ( im Vergleich zu Rückblickspiegel, die am vorderen Kotflügel angebracht sind ). Ein Blick in den Vorwärtsblickspiegel vor dem Ausscheren zum Überholvorgang sollte unerläßlich sein, da es Verkehrssituationen gibt, wo ein Fahrer bei bloßer Betrachtung des Gegenverkehrs durch die Windschutzscheibe trotz größter Aufmerksamkeit ein entgegenkommendes Fahrzeug übersehen kann. Auch das ständige Ausscheren von Fahrern, die buchstäblich bei jeder sich bietenden Gelegenheit zu überholen versuchen und damit reihenweise entgegenkommende Fahrer in Angst und Schrecken versetzen, müßte sich durch einen Vorwärtsblickspiegel einschränken lassen können.

0190677

Fig.1 zeigt eine über einen schwenkbar gelagerten Halter 12c am vorderen Kotflügel eines Kraftfahrzeuges 13 befestigte Spiegeleinheit 20, die auf der Fahrerseite angeordnet ist und eine zylinderförmig oder kegelförmig gewölbte Ausblickscheibe 26 aufweist.

Fig.2 zeigt einen Querschnitt durch die Spiegeleinheit im Bereich der Ausblickscheibe 26 mit einem über der Scheibe angeordneten doppelwandigen Vordach, dessen Doppelwandigkeit für die Befeuchtung der Ausblickscheibe sowohl bei Regen als auch bei Inbetriebnahme der Wasserversorgungseinrichtung sinnvoll und zweckdienlich genutzt ist.

Fig.3 zeigt im Längsschnitt durch die Spiegeleinheit die vom Gehäuserahmen 60 und den Spiegeleinsätzen 1 u. 2 des Vorwärtsblickspiegels sowie den beiden Scheiben 25 u. 26 gebildete, hermetisch abgedichtete Kammer 57 der Spiegeleinheit 20 mit dem Antriebsraum 170, in dem Getriebemotor, Wasserpumpe, Wasserbehälter und diverse Hubmagnete für das Wischen und Säubern der Ausblickscheibe 26 untergebracht sind.

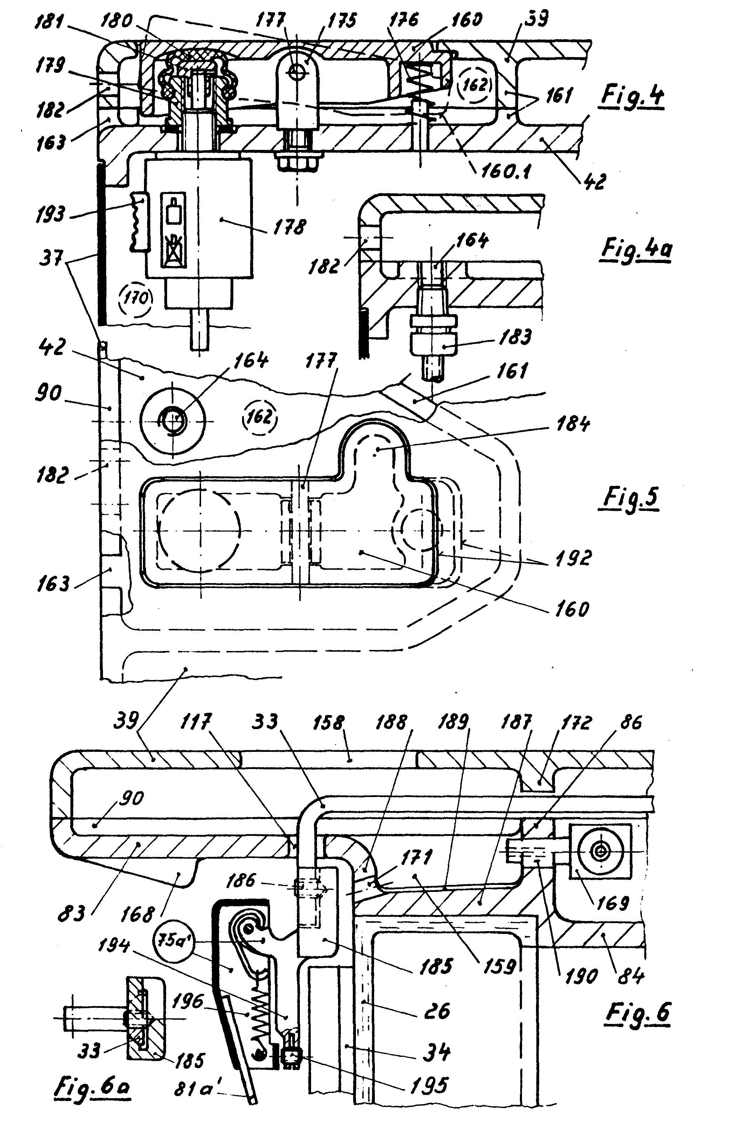

Fig.4 zeigt eine zwischen dem oberen Gehäusesteg 42 und dem Gehäusedeckel 39 gebildete Wasserkammer 162 zum Auffangen des Regenwassers mit einer oben bündig zum Gehäusedeckel in dessen freigesparter Wandung eingesetzten Klappe 160, die automatisch mit der Betätigung des Scheibenwischers über einen Hubmagneten 178 gegen die Vorspannkraft einer Druckfeder 176 geöffnet bzw. in Schwenkstellung 160.1 gebracht wird, sofern nicht gleichzeitig mit dem Scheibenwischer die Bewässerung in Betrieb gesetzt wird bzw. die Intervallschaltung des Scheibenwischers getätigt ist.

Fig.4a zeigt den bündig zur Gehäuseumrandung bzw. Gehäusedeckelauflage hochgezogenen Überlauf 164 in der Wasserkammer 162, über den das Regenwasser in den Wasserbehälter 77 läuft (s. Fig.1), sofern über die geöffnete Klappe 160 mehr Wasser in die Wasserkammer eindringt, als durch die Ablauföffnung 163 aus der Kammer auslaufen kann (s. Fig.4).

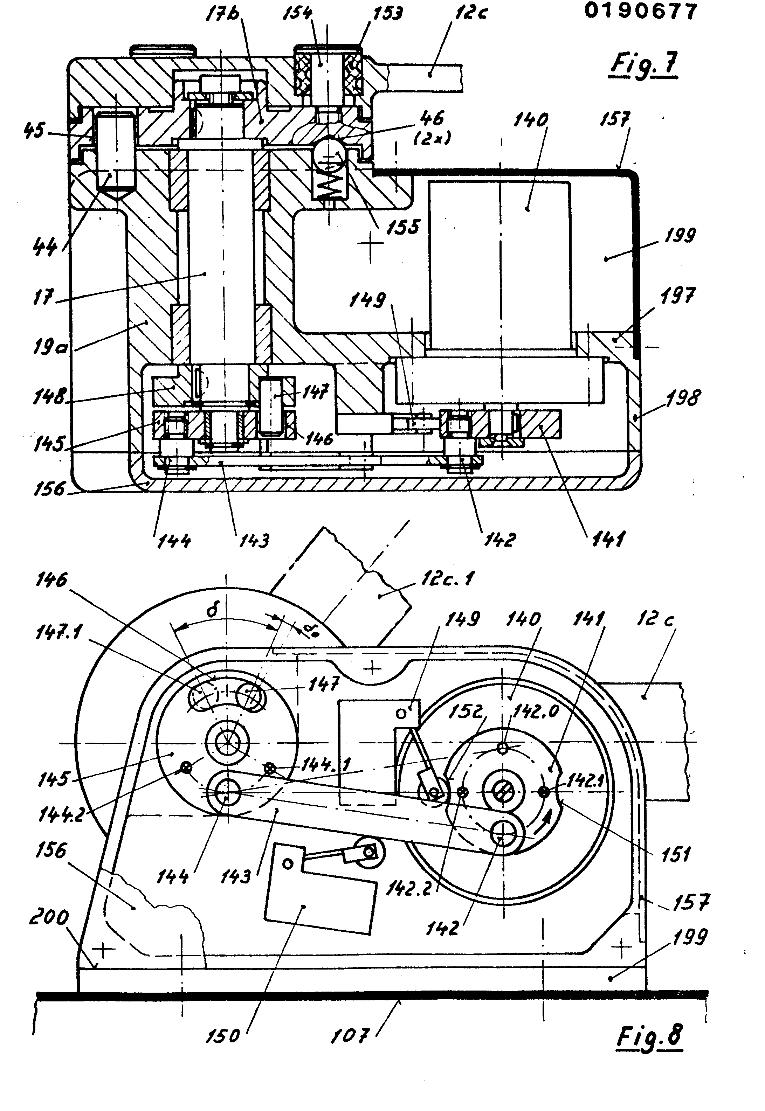

Fig.5 zeigt die in eine Aussparung des Gehäusedeckels bündig zu
dessen Oberfläche eingesetzte Klappe 160 über der Wasserkammer 162. Die Klappe kann über eine seitlich angeformte
Taste 184 auch durch Fingerdruck geöffnet werden, so daß
der Wasserbehälter 77 nachgefüllt werden kann, ohne daß
der zweckmäßigerweise abklapp- u. verschließbare Deckel 37
geöffnet werden muß (s. Fig.4). Beim Nach- oder Auffüllen
muß lediglich die Ablauföffnung 163 mit dem Daumen zugehalten werden. ████████████████████████████████████████

████████████████████████████████████████████████████

████████████████████████████████████████████████████

████████████████████████████████████████

Auf der gegenüberliegenden Seite vom Deckel 37, also auf
der Innenseite der Spiegeleinheit, ist entweder ein Deckel
fest aufgeschraubt oder eine abschließende Wandung zwischen
den Gehäusestegen mit angegossen, so daß der Maschinenraum
kpl. abgeschlossen ist.

Fig.6 zeigt in etwas größerem Maßstab einen Ausschnitt aus Fig.2
mit dem doppelwandigen Vordach über der Ausblickscheibe 26,
wobei das am Deckenteil 84 des Gehäuserahmens angeformte
Vordach über der Scheibe den Vordachboden 83 bildet, der
unmittelbar über der Ausblickscheibe zu einer Auffangwanne
159 ausgebildet ist, deren Boden 187 auf der Ausblickscheibe aufliegt und deren Wände durch die kreisbogenförmige,
bündig zur Scheibe anschließende Wandung 188, sowie die
Wandung 86 gebildet sind, während der Gehäusedeckel 39 die
Vordachdecke bildet und Schlitze 158 aufweist, durch die
es durchregnen kann. Die Wandung 86 ist bündig bis zur Gehäuseumrandung bzw. Deckelauflage hochgezogen, wobei der
Wischbügel knapp über deren Stirnseite hinweg geführt und
mit seinem abgewinkelten Schwenkende durch einen kreisbogenförmigen Schlitz im Vordachboden 83 hindurch geführt
ist. Über der Wandung 86 ist unter dem Gehäusedeckel eine
Rippe 172 angeformt, deren Stirnfläche knapp über dem
Wischbügel liegt, so daß der Wischbügel bei äußerer Gewalteinwirkung entweder an der Rippe 172 oder an der Wandung
86 anschlägt, bevor er bleibend deformiert werden kann.
Am Grund der Wanne 159 ist eine Auslaufbohrung 171 schräg
durch die Wandung 188 hindurchgeführt.

Fig.6a zeigt über der Symmetrielinie einen Schnitt durch den Wischbügel 33 oberhalb vom Klemmstück 185 des Federgelenkes 75a', über das der Wischhebel 81a' mit dem Scheibenwischerblatt am Wischbügel befestigt ist - und unter der Symmetrielinie einen Schnitt durch die Schwalbenschwanz-Klemmverbindung zwischen dem Klemmstück und dem Wischbügel, dessen Ende entsprechend dem Innenteil einer üblichen Schwalbenschwanz- Verbindung ausgebildet ist.

Fig.7 zeigt die Lagerung des Halters 12c der Spiegeleinheit,- der mit seiner vertikal nach unten ragenden Schwenkachse 17 in einem seitlich am vorderen Kotflügel 107 des Kraftfahrzeuges befestigten Lagergehäuse 19a schwenkbar gelagert ist. Für das Aus- u. Einschwenken des Halters ist ein Getriebemotor 140 und ein üblicher Kurbeltrieb vorgesehen, wobei die über den Kurbeltrieb erzeugte Schwenkbewegung einer Schwenkscheibe 145 durch einen Microschalter 149 in zwei Schwenkphasen unterteilt wird - und zwar so, daß die Ruheschwenkstellung genau in die Mitte der Schwenkamplitude zu liegen kommt. Dabei weist die Schwenkscheibe eine in Umfangsrichtung verlaufende Ringnut 146 auf, die beim Zurückschwenken in Ruheschwenkstellung die Bewegungsfreiheit des Mitnehmerbolzens 147, der in die Ringnut hineinragt, wiederherstellt. Um den Halter in seinen beiden Endschwenkstellungen festzuhalten sind zwei Ansenkungen 46 und eine axial angefederte Kugel 155 zwischen Halter und Lagergehäuse vorgesehen.

Fig.8 zeigt den Schwenkmechanismus für den Halter 12c von unten bei abgenommenen Lagerdeckel 156.
Über zwei Einbuchtungen 151 u. 152 am Umfang der Kurbelscheibe 141 wird der Getriebemotor 140 und damit die fest auf dessen Antriebswelle aufgesetzte Kurbelscheibe nach jeweils einer halben Umdrehung wieder zum Stillstand gebracht. Der Kurbelbolzen 142 steht also bei gleichbleibender Drehrichtung der Kurbelscheibe einmal in der Stellung 142 und einmal in der Stellung 142.0 in Ruhestellung. Beim Überlaufen seiner Zwischenstellungen 142.1 u. 142.2 wird der Schwenkbolzen 144 über das Pleuel 143 einmal in die Ausschwenkstellung 144.1 und zurück und das anderemal in die Ausschwenkstellung 144.2 und wieder zurück geschwenkt, wodurch der Mitnehmerbolzen 147 und der in drehfester Verbindung zum Bolzen stehende Halter 12c einmal in Ausschwenklage 147.1 bzw. 12c.1 und das anderemal wieder zurück in dargestellte Gebrauchslage geschwenkt werden. Beim Zurückschwenken in ihre Ausgangslage gibt die Ringnut mit ihrer einen Anschlagfläche den Mitnehmerbolzen frei, während sie sich gleichzeitig mit ihrer anderen Anschlagfläche in Anschlagstellung zum Bolzen bringt.

**Fig.1** zeigt eine über einen schwenkbar gelagerten Halter 12c am vorderen Kotflügel eines Kraftfahrzeuges 13 befestigte Spiegeleinheit 20, die auf der Fahrerseite angeordnet ist und eine zylinderförmig oder kegelförmig gewölbte Ausblickscheibe 26 aufweist.

Beim Öffnen der Fahrertüre 103 um ihre Schwenkachse 105 wird die Spiegeleinheit über einen Gelenkhebel 21, der einerseits an der Fahrertüre und andererseits am unteren Gehäusesteg der Spiegeleinheit angelenkt ist, um eine vertikal nach oben ragende Achse 18 des Halters 12c mit abgeschwenkt, so daß die Türe nicht gegen den Rückblickspiegel der Spiegeleinheit anschlägt.

Der Halter ist nun seinerseits schwenkbar um eine vertikal nach unten ragende Schwenkachse 17 in einem seitlich am vorderen Kotflügel befestigten Lagergehäuse 19 gelagert.

Sobald nun die Verriegelung der Fronthaube 106 gelöst ist, wird der Halter um seine Schwenkachse 17 mittels eines im Lagergehäuse untergebrachten Getriebemotors von einer über einen Kurbeltrieb angetriebenen Schwenkscheibe nach außen geschwenkt, wodurch die Spiegeleinheit aus dem Schwenkbereich der Motorhaube ausgeschwenkt wird.

Dabei ist ihre Ausschwenklage, relativ zur Achse 18 für die Lagerung der Spiegeleinheit gesehen, durch den Gelenkhebel 21 mitbestimmt. Die Fronthaube kann also nun geöffnet werden.

Das Wiedereinschwenken des Halters bzw. der Spiegeleinheit erfolgt ebenfalls automatisch durch den Getriebemotor über die Schwenkscheibe des Kurbeltriebes, sobald die Fronthaube wieder zugeklappt ist.

Das Aus- u. Einschwenken des Halters bzw. der Spiegeleinheit kann auch jederzeit von Hand bewerkstelligt werden, da die mit einer Ringnut versehene Schwenkscheibe nach dem jeweiligen

Schwenkvorgang sofort wieder in ihre Ausgangslage zurückschwenkt und durch das Zurückschwenken der Ringnut, in die ein verdrehfest zum Halter angebrachter Mitnehmerbolzen ragt, die Bewegungsfreiheit des Halters innerhalb des erforderlichen Schwenkbereiches wiederhergestellt ist.

Dabei ist der Halter bzw. die Spiegeleinheit in den beiden Endschwenkstellungen durch eine übliche, zwischen Halter und Lagergehäuse angeordnete Einrastvorkehrung festgehalten, während für die Schwenkbegrenzung eine eigene, stabile Ringnut mit zugehörigem Anschlagbolzen zwischen Halter und Lagergehäuse vorgesehen sind.

Für das Sauberwischen der Ausblickscheibe 26 ist ein schwenkbar um eine vertikale Achse 32 gelagerter Wischbügel 33 vorgesehen, dessen abgewinkeltes Schwenkende durch einen kreisbogenförmigen Schlitz 117 im Vordachboden 83 des Gehäuserahmens 60 hindurchgeführt ist. Die Achse 32 entspricht dabei gleichzeitig der Wölbungsachse der zylinderförmig oder kegelförmig gewölbten Ausblickscheibe.

Über eine ebenfalls um die Achse 32 schwenkbar gelagerte Schwinge 31a, die über einen üblichen Kurbeltrieb 27, 29 von einem Getriebemotor 53 (s. Fig.3) angetrieben ist, wird nun der zwischen Festanschlag 131 und Lasche 139 der Schwinge eingebettete Wischbügel 33 in Schwenkbewegung versetzt, wobei eine Druckfeder 128 zwischen Schwinge und Wischbügel angeordnet ist, welche den Wischbügel gegen den Festanschlag der Schwinge andrückt bzw. anzudrücken versucht.

Während nun die Schwinge 31a stets zwischen ihren Endschwenkstellungen R und T2 hin und her geschwenkt wird, wird das Ausschwenken des Wischbügels 33 in seine Ruhestellung R durch eine Klinke 124, gegen die der Wischbügel über eine Anschlagfläche 130 in der Schwenkstellung T1 anschlägt, gegen die Vorspannkraft der Druckfeder 128 verhindert, so daß also die Schwenkbewegung des Wischbügels während des Wischens durch die Endschwenkstellungen T1 u. T2 begrenzt ist.

Erst nach Stillsetzung des Wischantriebes wird die Klinke von einer Druckfeder 113a über einen Ausklinkhebel 125 und eine Schwenkwelle 126 aus dem Schwenkbereich des Wischbügels und in den Bereich der am Wischbügel angebrachten Ausklinkung 129 geschwenkt, so daß der Wischbügel in seine Ruhelage R ausschwenkbar ist, wo das am abgewinkelten Schwenkende des Wischbügels befestigte

Scheibenwischerblatt 34 (s. Fig.2) über einer am äußeren Rand
der Ausblickscheibe 26 angeformten Mulde 58 berührungsfrei zur
Scheibe gehalten ist.

Dabei läuft der über ein Federgelenk 75a am Wischbügel befestigte Wischhebel 81a beim Ausschwenken in die Ruhelage mit seinem
abgewinkelten Ende 47 auf einen beispielsweise direkt an der
Ausblickscheibe angeformten Stollen 48 auf (s. Fig.2).

Das Wiedereinschwenken der Klinke bei Inbetriebsetzung des Wischantriebes wird von einem Hubmagneten 112a bewirkt, der drückend
wirkend direkt gegen den Ausklinkhebel 125 angestellt und auf
dem unteren Gehäusesteg 43 befestigt ist, wobei hier sein Hub
nicht ganz voll ausgenutzt und durch eine Anschlagschraube 191
begrenzt ist. Mittels der Anschlagschraube, deren Mutterteil auf
dem unteren Gehäusesteg befestigt ist, kann die Klinke exakt auf
die Anschlagfläche 130 des Wischbügels eingestellt werden.

Dabei ist die Anschlagfläche nicht genau senkrecht zur Längsrichtung der Klinke gerichtet, sondern weist eine leichte Schräglage
zur Senkrechten auf und zwar in dem Sinn, daß die Anpreßkraft der
Druckfeder 128 eine kleine Kraftkomponente in Ausschwenkrichtung
der Klinke zur Ausklinkung 129 hin bewirkt, die jedoch nur einen
Teil der Reibkraft kompensieren soll, welche das Ausschwenken der
Klinke ohne äußere Krafteinwirkung verhindert.

Damit kann die erforderliche, von der Druckfeder 113a aufzubietende Kraft zum Ausschwenken der Klinke auf ein Minimum reduziert
werden, wodurch auch der Hubmagnet 112a, der ja die Federkraft
beim Einschwenken der Klinke überwinden muß, so ausgelegt werden
kann, daß er preisgünstigst zu erstellen ist.

Die Druckfeder 113a ist zweckmäßigerweise über die Anschlagschraube 191 gestülpt und stützt sich mit ihrem vom Ausklinkhebel abgewandten Federende gegen das Mutterteil der Schraube ab.

Zwecks Befeuchtung der Ausblickscheibe 26 bei Regenwetter sind
Schlitze 158 oder dgl. im Gehäusedeckel 39 angebracht, wobei die
Schlitze quer über dem kreisbogenförmigen Schlitz 117, der für
die Durch-führung des Wischbügels im Vordachboden 83 vorgesehen
ist, angeordnet sind, so daß Regentropfen vor und hinter dem
Schlitz 117 auf den Vordachboden fallen, wo sie den Erfordernissen entsprechend aufgrund des flacheren Einfallwinkels mit ansteigender Fahrgeschwindigkeit mehr direkt in der im Vordachboden gebildeten Auffangwanne 159 auftreffen, als vor dem Schlitz.

Während nun der auf alle Fälle kleinere Teil des Regenwassers, der während der Fahrt auf den erhöhten Vordachboden 83 fällt, über die Vorderkante des Schlitzes 117 nach unten durch den Schlitz rinnt und vor der Ausblickscheibe herabtropft, läuft das in der Auffangwanne 159 gesammelte Wasser durch eine am Grund der Wanne angebrachte Auslaufbohrung 171 vor die Ausblickscheibe und rieselt an deren Außenfläche entlang gemächlich nach unten ab (s. Fig.2).

Steigt das Wasser in der Wanne an, dann läuft das überschüssige Regenwasser zunächst durch den Überlaufschlitz 190 in der Wandung 86 der A.- Wanne auf das Deckenteil 84 des Gehäuserahmens 60 über und gelangt über ein entsprechendes Gefälle im Deckenteil 84 zum Ablaufloch 137a, um nach unten abzulaufen.

Das Ablaufloch 137a ist vertikal durch die zwischen Ausblickscheibe und Ausblickspiegeleinsatz 2 vom Gehäuserahmen 60 gebildete Wandung in Längsrichtung derselben hindurchgeführt und die Wandung 86 ist bis zu der von der Gehäuseumrandung 90 gebildeten Auflagefläche für den Gehäusedeckel hochgezogen und schließt mit der vorderen Rahmenwandung außen bündig ab.

Steigt das Regenwasser in der Auffangwanne noch höher an, dann läuft es über die vordere, kreisbogenförmig verlaufende Wandung 188 der Auffangwanne (s. Fig.6) auf den erhöhten Vordachboden 83 über und rinnt dann durch den Schlitz 117 hindurch und an der Ausblickscheibe entlang nach unten ab.

Der erhöhte Vordachboden 83 ist seitlich noch vor den Enden des kreisbogenförmigen Schlitzes 117 bis zu der von der Gehäuseumrandung gebildeten Auflagefläche für den Gehäusedeckel 39 hochgezogen und die vordere Wandung 188 (s. Fig.6) schließt außen bündig zur gewölbten Ausblickscheibe an.

Um bei Regenwetter das Regenwasser zum Auffüllen des Wasserbehälters zu nutzen, ist zwischen dem oberen Gehäusesteg 42, der als Boden zur Kammer dient, und dem Gehäusedeckel 39, der als Decke dient, eine Wasserkammer 162 angeordnet, deren Außenwand durch die Gehäuseumrandung 90 sowie die Umrandung des Gehäusedeckels bereits gebildet ist, während für die Innenwandungen eine sowohl auf dem oberen Gehäusesteg als auch auf der Unterseite des Gehäusedeckels angebrachte, gleich verlaufende Umrandung 161 vorgesehen ist.

Die so gebildeten Umrandungen auf dem oberen Gehäusesteg und auf der Unterseite des Gehäusedeckels liegen stirnseitig plan aufeinander auf und bilden so die Wandungen der Wasserkammer 162.
Oben bündig zum Gehäusedeckel ist nun eine Klappe 160 in einer über der Wasserkammer angeordneten und entsprechend den Umrissen der Klappe ausgebildeten Aussparung 192 des Gehäusedeckels untergebracht (s. Fig.4 u.5).
Die Klappe ist als beidarmig wirkender Hebel ausgebildet und wird bei Betätigung des Scheibenwischers mittels eines Hubmagneten gegen Federdruck geöffnet (s. Fig.4), sofern nicht gleichzeitig die Wasserpumpe zwecks Bewässerung der Ausblickscheibe in Betrieb gesetzt wird bzw. die Intervallschaltung getätigt ist.
Solange es nur schwach regnet läuft das Regenwasser, welches über die geöffnete Klappe in die Wasserkammer gelangt, durch eine entsprechend bemessene Ablauföffnung 163, die durch eine Ausspa-rung in der Gehäuseumrandung gebildet ist, sofort wieder ungenutzt ab.
Dadurch wird die Kammer auch gereinigt, bevor das Regenwasser bei stärker einsetzendem Regen über einen Überlauf 164 und eine Schlauchverbindung zur Kappe 165 und in den Wasserbehälter läuft.
Dabei ist die Kappe 165 am Deckel 78 des Wasserbehälters 77 angeformt oder aufgesetzt und weist einen Schlauchanschlußnippel sowie ein Entlüftungsloch 166, das zur Entlüftung des Behälters dient, auf.
Durch das Entlüftungsloch kann das Regenwasser auch austreten sobald der Behälter gefüllt ist, wo es dann an der Behälterwandung entlang nach unten in die Vertiefung 173 im unteren Gehäusesteg 43 rieselt und durch ein Ablaufloch 174 abläuft.
Die Vertiefung, in welcher der Behälter durch einen angefederten Niederhalter 79 festgehalten ist, dient auch zur Lagefixierung des Behälters.
Damit das überschüssige Regenwasser auch gut abläuft sind auf dem Behälterboden oder in der Vertiefung radial zum Ablaufloch hin verlaufende Rillen oder Erhöhungen angebracht.
Damit nun das überschüssige Regenwasser bei gefülltem Wasserbehälter oder sehr starkem Regen auch aus der Wasserkammer ablaufen kann bevor dieselbe überläuft, sind in der Umrandung des Gehäusedeckels Schlitze 182 angebracht, wobei die Schlitze etwas über dem Überlauf 164 angeordnet sind (s. Fig.4 u.4a).
Die Klappe kann auch durch Fingerdruck geöffnet werden, so daß der Wasserbehälter über die Wasserkammer von Hand aufgefüllt werden kann, wobei man die Ablauföffnung 163 zuhalten muß.

Bei Nieselwetter und feuchten Straßenverhältnissen nach Regengüssen, wo sich also vorher der Wasserbehälter automatisch gefüllt hat und wo nun die Wasserversorgungseinrichtung zum Sauberwischen der Ausblickscheibe erforderlich ist, saugt nun die Wasserpumpe 80 nach Inbetriebsetzung derselben über eine Schlauchverbindung zum Wasserbehälter bzw. ein im Deckel des Wasserbehälters befestigtes und entsprechend lang ausgebildetes Ansaugrohr
167 Wasser aus dem Behälter und pumpt es über eine weitere
Schlauchverbindung und ein Rückschlagventil 169 in die Auffangwanne 159.

Das Rückschlagventil, welches im Gegensatz zu einer Spritzdüse
unempfindlich gegen Verstopfung ist und demzufolge auch einen
konstant bleibenden Wasserdurchfluß garantiert, ist in der Wandung 86 der Auffangwanne befestigt bzw. in dieselbe über einen
selbsthemmenden Kegelsitz oder dgl. eingesetzt und kann auf Kundenwunsch auch einstellbar ausgeführt werden.

Es öffnet, wie aus der symbolischen Darstellung ersichtlich,
durch den von der Wasserpumpe 80 erzeugten Wasserdruck gegen die
Vorspannkraft einer Druckfeder, wobei die Vorspannkraft hier mittels einer Stellschraube einstellbar ist.

Das Wasser läuft nun aus der Auffangwanne über die Auslaufbohrung 171 vor die Ausblickscheibe, wobei in der Auffangwanne an
tiefster Stelle auch noch eine Rille 189 (s. Fig.6) vom Rückschlagventil zur Auslaufbohrung hin im Wannenboden 187 angebracht
ist, damit das Wasser unmittelbar nach Inbetriebnahme der Pumpe
zur Scheibe gelangt und sich nicht erst in der Wanne ansammeln
muß.

Von der Wasserkammer 162 aus kann selbstverständlich über einen
weiteren Überlauf eine Schlauchverbindung zum Wasserbehälter unter der Fronthaube 106 des Kraftfahrzeuges 13, der für die Säuberung der Windschutzscheibe vorgesehen ist, gelegt werden, damit auch das Kraftfahrzeug etwas von den Raffinessen einer erfindungsgemäßen Spiegeleinheit abbekommt, wobei hier über den
Überlauf ein Sieb gestülpt werden sollte, damit eventuelle Verunreinigungen im Regenwasser von den Spritzdüsen der Windschutzscheibe ferngehalten werden.

Falls erforderlich könnte man zum Schutz der Wasserpumpe 80 vorsorglich auch am Zulauf zum Wasserbehälter 77 ein Sieb in oder
unter die Kappe 165 des Deckels 78 einsetzen.

**Fig.2** zeigt einen Querschnitt durch die Spiegeleinheit im Bereich der zylinderförmig oder kegelförmig gewölbten Ausblickscheibe 26, die hier der Einfachheit halber zylinderförmig gewölbt dargestellt ist.

Das Gehäuse 11 ist hier im Teilschnitt durch den Gehäuserahmen 60 mit dem Rahmenboden 89 und dem Deckenteil 84 dargestellt.

Am Deckenteil 84 des Gehäuserahmens ist ein Vordachboden 83 angeformt, der unmittelbar über der Ausblickscheibe zu einer Auffangwanne 159 für Regenwasser ausgebildet ist.

Die Vordach- Decke zu dem doppelwandigen Vordach bildet ein Gehäusedeckel 39, der gleichzeitig den Antriebsmechanismus für das Scheibenwischerblatt 34 abdeckt und mit seiner Umrandung stirnseitig plan und außen bündig auf der Gehäuseumrandung 90 aufliegt, wobei der Rückblickspiegel 10 vom Gehäusedeckel mit überdeckt werden kann (s. Fig.3).

Damit nun Regen auf den Vordachboden 83 fallen kann, sind Schlitze 158 oder dgl. im Gehäusedeckel angebracht, wobei die Schlitze quer über dem kreisbogenförmigen Schlitz 117, der für die Durchführung des Wischbügels 33 im Vordachboden angebracht ist, angeordnet sind.

Für den Ablauf des Regenwassers aus der Auffangwanne ist eine Auslaufbohrung 171 am Grund der Wanne angeordnet, wobei ein auf der Unterseite des Vordachbodens angeformter, keilförmig ausgebildeter Luftstromabweiser 168 das Auslaufen des Regenwassers aus der Wanne in Abhängigkeit zur Fahrgeschwindigkeit so beeinflussen soll, daß bei höherer Fahrgeschwindigkeit durch Unterdruck oder Injektorwirkung etwas mehr Regenwasser aus der Auslaufbohrung 171 austritt.

Dabei dürfte eine leicht kegelförmig gewölbte Ausblickscheibe, deren Kegel sich nach unten verjüngt, strömungstechnisch leichte Vorteile gegenüber einer zylinderförmig gewölbten Scheibe bieten.

Das Scheibenwischerblatt 34 ist schwenkbar an einem Wischhebel 81a gelagert, wobei seine Schwenkbarkeit durch Dämpfungselemente etwas gedämpft und eingeschränkt ist, während der Wischhebel abschwenkbar über ein Federgelenk 75a am abgewinkelten Schwenkende des Wischbügels 33 befestigt ist.

Beim Ausschwenken in die Ruhelage R läuft der Wischhebel mit seinem abgewinkelten Ende 47 auf einen Stollen 48, der hier an der Ausblickscheibe 26 angeformt ist, auf, so daß das Scheiben-

wischerblatt in Ruhelage berührungsfrei zur Ausblickscheibe angeordnet ist und bei Temperaturen unter 0 Grad Celsius nicht festfrieren kann.

Durch die berührungsfreie Ruhelage des Wischblattes ist auch ein
Festkleben der Wischlippe an der Scheibe bei Hitze und eine Deformation der Lippe durch den ständigen Anpreßdruck des Federgelenkes verhindert, so daß sich die Lebensdauer des Wischblattes
wesentlich erhöht (gegenüber aufliegenden Wischblättern).

Fig.3 zeigt im Längsschnitt durch die Spiegeleinheit 20 bzw. deren Gehäuse 11 die vom Gehäuserahmen 60 und den beiden Spiegeleinsätzen 1 u. 2 sowie den beiden Scheiben 25 u. 26 gebildete,
hermetisch abgedichtete Kammer 57 des Vorwärtsblickspiegels mit
dem zwischen den Gehäusestegen 42 u. 43 gebildeten Antriebsraum
170, in dem ein Getriebemotor 53 für den Schwenkantrieb des
Scheibenwischerblattes 34 mit einem Hubmagneten 112a und einer
Druckfeder 113a für die Schwenk- u. Ruhelage des Wischblattes,
sowie ein Wasserbehälter 77 und eine Wasserpumpe 80 für die Befeuchtung der Ausblickscheibe 26 und ein Hubmagnet 178 für die
Betätigung der Klappe 160 in der Wasserkammer 162 untergebracht
sind (siehe auch Fig.1 u.4).

Der Getriebemotor 53 ist von unten an einer Versenkung im oberen
Gehäusesteg 42 angeflanscht, wobei die Versenkung oben am äußeren Rand ringsum eine Vertiefung aufweist, in der eine oder mehrere kleine Bohrungen angebracht sind, durch die evtl. in die
Versenkung gelangtes Spritzwasser nach unten in den Antriebsraum 170 abtropfen kann, von wo aus es dann über ein leichtes
Gefälle beispielsweise durch das Ablaufloch 174 abtropft.

Der Hubmagnet 112a, der direkt gegen den Ausklinkhebel 125 angestellt ist, ist fest auf dem unteren Gehäusesteg 43 aufgeschraubt
und in seiner Lage durch entsprechend angeordnete Befestigungslöcher bei exakter Anordnung der Schwenkwelle 126 sowie exakter
Befestigung der Klinke 124 und des Ausklinkhebels 125 auf der
Schwenkwelle so fixiert, daß sein Hub nicht ganz genutzt ist, so
daß die Klinke 124 mittels der Anschlagschraube 191 genau auf
die Anschlagfläche 130 des Wischbügels 33 einstellbar ist.

Die Druckfeder 113a ist über die Anschlagschraube 191 gestülpt
und stützt sich einerseits mit einer gewissen Vorspannkraft direkt gegen den Ausklinkhebel 125 und andererseits gegen das Mutterteil der Anschlagschraube ab, wobei das Mutterteil fest auf

dem unteren Gehäusesteg aufgeschraubt ist.

Der Wasserbehälter 77 wird durch einen angefederten Niederhalter 79, der am oberen Gehäusesteg befestigt ist, über seinen Deckel 78 in eine im unteren Gehäusesteg angebrachte Vertiefung 173 gedrückt, wodurch seine Lage fixiert ist und wodurch er gegen Erschütterungen ausreichend abgesichert sein sollte.

Dabei ist es vielleicht zweckmäßig, den aus einem Federstahlband gefertigten Niederhalter um eine vertikale Achse schwenkbar am oberen Gehäusesteg zu befestigen und mit einem seitlich ausgestanzten Schlitz zu versehen, über den er unter den Kopf einer im Gehäusesteg eingeschraubten Schaftschraube eingehängt werden kann, so daß der Behälter nach dem Einhängen des angefederten Niederhalters frei herausnehmbar ist und wobei dann auch der Niederhalter entsprechend stabil ausgebildet sein kann, so daß seine Anpreßkraft mit Sicherheit ausreichend ist.

Unter dem Behälter sind radial nach innen verlaufende Rillen im Behälterboden oder in der Vertiefung angebracht, damit aus dem Behälter überlaufendes Regenwasser nach innen zum Ablaufloch 174 gelangen kann.

Die Wasserpumpe 80 (s. Fig.1) ist auf dem unteren Gehäusesteg 43 von außen gesehen hinter dem Wasserbehälter bzw. hinter dem Rückblickspiegel befestigt, wobei vom Druckstutzen der Pumpe aus ein Schlauch durch ein Loch im oberen Gehäusesteg hindurchgeführt ist.

Der Hubmagnet 178 (s. Fig.4) ist- im Antriebsraum 170 angeordnet- über seinen Zentralgewindeansatz am oberen Gehäusesteg 42 befestigt, wobei er mit seiner Druckstange nach oben durch den Gehäusesteg hindurchragt und wobei die Druckstange bei Betätigung des Hubmagneten die Klappe 160 in die Stellung 160.1 schwenkt, so daß Regenwasser in die Wasserkammer 162 läuft.

Der Antriebsraum 170 ist auf der Außenseite der Spiegeleinheit mittels eines abklappbaren und verschließbaren Deckels 37 (s. Fig.4) verschlossen und abgesichert, während auf der Innenseite entweder ein Deckel festgeschraubt ist oder eine abschließende Wandung zwischen den Gehäusestegen mit angeformt bzw. angegossen ist, falls die Auflagefläche für die Befestigung und Abdichtung des Spiegeleinsatzes 2 am Gehäuserahmen im Gußverfahren genügend glatt und plan ohne Nachbearbeitung hergestellt werden kann.

Für die Abdichtung der Spiegeleinsätze 1 u.2 sind zweckmäßigerweise Flachdichtungen vorgesehen, während die Scheiben 25 u. 26 luft- u. wasserdicht eingeklebt oder eingekittet sind.

Die Spiegelflächen sowie die Scheiben sind in Draufsicht gesehen rechtwinklig oder zumindest annähernd rechtwinklig ausgebildet.

Farblich soll die Spiegeleinheit zur Farbe des Kraftfahrzeuges passen, wobei es nicht die gleiche Farbe sein muß, weil ja eine Krawatte auch nicht dieselbe Farbe hat wie der Anzug, zumal eine Spiegeleinheit im Gegensatz zu einer Krawatte wenigstens zweckmäßig ist (ohne Bluff).

Der Gehäusedeckel 39 bildet hier über dem Rückblickspiegel 10 ein kleines Vordach, was bei Schneefall von Vorteil ist wenn das Fahrzeug im Freien steht,- bei Regen aber den Nachteil hätte, daß das Regenwasser vom Spiegel abgehalten wird und der Spiegel nicht mit saubergewaschen wird.

Deshalb ist über dem Spiegel eine Mulde in Längsrichtung desselben im Gehäusedeckel eingeformt, von der aus mehrere Löcher vertikal zum Rückblickspiegel hindurchgeführt sind, so daß das Regenwasser von der Mulde aus über die Löcher und die Spiegelfläche abläuft und den Spiegel sauberwäscht.

Die Mulde könnte theoretisch auch an die Wasserversorgungseinrichtung angeschlossen werden, aber ob das praktisch etwas bringt ist eine andere Frage, da ja bei feuchten Straßenverhältnissen auch das Seitenfenster durch die Schmutzbildung immer undurchsichtiger wird,so daß es hier auf alle Fälle zweckmäßig ist, bei längeren Fahrten von der mitgeführten Wasserflasche Gebrauch zu machen.

Auch kann der Rückblickspiegel, falls erwünscht, bis zur Oberkante des Gehäusedeckels hochgezogen werden, wobei dann der Gehäusedeckel mit dem Gehäuse abschließt, was aber nicht so gefällig u. wahrscheinlich auch nicht erforderlich sein dürfte.


Fig.4 zeigt im Querschnitt durch die Spiegeleinheit eine über einer Wasserkammer 162 angeordnete, für die Nutzung des Regenwassers zum Auffüllen des Wasserbehälters 77 gedachte Klappe 160 im Längsschnitt der Klappe, wobei die Klappe mittels eines Hubmagneten 178 betätigt wird.

Die Klappe ist oben bündig zum Gehäusedeckel 39 in eine entsprechend den Umrissen der Klappe ausgebildete  Aussparung 192 (s. Fig.5) des Gehäusedeckels eingesetzt und als beidarmig wirkender Hebel ausgebildet.

Dabei ist sie schwenkbar um eine horizontal angeordnete Achse 177 an einem auf dem oberen Gehäusesteg 42 befestigten Lagerbock 175 gelagert, wobei der obere Gehäusesteg gleichzeitig den Boden der Wasserkammer 162 bildet.

Die Wände der Wasserkammer sind auf der Außenseite der Kammer durch die bereits vorhandene Gehäuseumrandung 90 (s. Fig.5) sowie die äußere Umrandung des Gehäusedeckels und auf der Innenseite der Kammer durch eine sowohl auf dem Gehäusesteg als auch auf der Unterseite des Gehäusedeckels angebrachte, gleichverlaufende Umrandung 161 gebildet.

Dabei liegen die Umrandungen des Gehäuses und des Gehäusedeckels stirnseitig plan und möglichst wasserdicht aufeinander auf, so daß praktisch eine fugenlose Wandung rings um die Kammer geschaffen ist, für deren Abdichtung jedoch keine Dichtung erforderlich ist, da ja das Regenwasser drucklos in die Wasserkammer einläuft und die Spiegeleinheit auch entsprechende Ablauföffnungen aufweist.

Die Klappe 160 ist auf der Unterseite glockenförmig ausgehöhlt u. über den Lagerbock 175 gestülpt , damit sich unter der Klappe bei ansteigendem Wasserspiegel ein Luftpolster bildet und das Eindringen von Wasser unter die Klappe verhindert ist, wodurch kein Wasser über die Oberkante der Mutter 179, die für die Befestigung des Hubmagneten 178 vorgesehen ist, in den Hubmagneten gelangen kann. Außerdem sind auch noch reichlich bemessene Überlaufschlitze 182 in der Umrandung des Gehäusedeckels angebracht, damit das Regenwasser bei sehr starkem Regen ungenutzt ablaufen kann, noch bevor es die Oberkante der Mutter erreichen könnte (ohne Luftp.). Zusätzlich zum Schutz des Hubmagneten ist noch eine Faltenbalgkappe 180 aus Gummi über die Mutter 179 und einen auf die Druckstange des Hubmagneten aufgesetzten Stöpsel 181 gestülpt, wobei am Umfang der Mutter eine Rille angebracht ist und wobei die Kappe am unteren Rand einen angeformten Wulst aufweist, damit sie entsprechend abdichtend auf die Mutter aufgespannt werden kann und festgehalten ist.

Damit das Luftpolster, welches sich bei ansteigendem Wasserspiegel unter der Klappe 160 bildet, nicht durch die Achsbohrung hindurch entweichen kann, ist die Achse 177 in der Klappe fest eingepreßt und mit entsprechendem Spiel im Lagerbock 175 drehbar gelagert (s. Fig.5). Als Achse kann ein handelsüblicher, gehärteter und geschliffener Zylinderstift aus rostfreiem Stahl verwendet werden.

Während nun an dem auf der Innenseite der Spiegeleinheit angeordneten Hebelende der Klappe eine Druckfeder 176 zwischen dem oberen Gehäusesteg und der Klappe wirksam angeordnet ist, ist an dem auf der Außenseite der Spiegeleinheit angeordneten Hebelende der Klappe der bereits erwähnte Hubmagnet 178 zwischen dem Gehäusesteg und der Klappe wirksam angeordnet, so daß die Druckfeder einerseits und der Hubmagnet andererseits jeweils nach oben auf die Klappe einwirkend, dieselbe in entgegengesetzte Schwenkrichtung um die Achse 177 zu schwenken versuchen.

Dabei ist die Klappe 160 bei unbetätigtem Hubmagnet von der Druckfeder gegen eine auf der Unterseite des Gehäusedeckels gebildete, etwas abgesetzte Anschlagfläche angedrückt und wird bei Betätigung des Hubmagneten durch dessen Druckstange entgegen der Vorspannkraft der Druckfeder in die Stellung 160.1 geschwenkt, so daß zwischen dem Gehäusedeckel und der Klappe eine Öffnung entsteht, durch die das Regenwasser in die Wasserkammer 162 laufen kann.

Durch die abgesetzte Anschlagfläche auf der Unterseite des Gehäusedeckels wird bei gleicher Schwenkstellung der Klappe eine etwas größere Öffnung zwischen Deckel und Klappe erzielt, wie dies ohne Absatz in der Deckelwandung der Fall wäre.

Der Hubmagnet ist über seinen Zentralgewindeansatz mittels der bereits erwähnten Mutter 179 am oberen Gehäusesteg befestigt, wobei eine Dichtscheibe unter die Mutter gelegt ist, damit das Regenwasser auch hier vom Magnet abgehalten ist.

Da die Regenwasserauffangeinrichtung in Ländern, wo es im Winter schneit, den ganzen Winter über keinen Sinn hätte und nur im Sommer ihren Zweck erfüllt, ist es zweckmäßig, die Stromzufuhr zum Magneten hier den Winter über ganz zu unterbrechen.

Weil das ja nur einmal im Jahr gemacht werden muß ist es zweckmäßig, einen Schalter 193 für die Stromunterbrechung im Antriebsraum 170 der Spiegeleinheit unterzubringen, wobei der Schalter, wie hier dargestellt, ähnlich wie bei einer Taschenlampe evtl. auch gleich am Hubmagneten angebracht sein könnte.

Wie bereits erläutert läuft das Regenwasser erst über die Ablauföffnung 163 direkt ab, um dann auch bei stärker einsetzendem Regen über den Überlauf 164 (s. Fig. 4a), der hier bündig zur Stirnseite der Gehäuseumrandung 90 angeordnet ist, zum Wasserbehälter 77 überzulaufen.

Füllt sich die Wasserkammer dann weiter an, dann läuft das überschüssige Regenwasser durch die in der Deckelumrandung angebrach-

ten Überlaufschlitze 182 nach außen ab.

Die Ablauföffnung 163 ist durch eine Aussparung in der Gehäuseumrandung 90 gebildet und braucht, nachdem ihr günstigster Querschnitt einmal ermittelt und festgelegt wurde, nicht einstellbar
ausgeführt werden, da sie ruhig etwas reichlich bemessen sein
kann; denn wenn es mal regnet, dann hört es meist so schnell
nicht mehr auf, so daß also immer ausreichend viel Wasser im Wasserbehälter sein dürfte.

Für die Druckfeder 176 ist in der Kappe 160 ein Sackloch und im
Gehäusesteg ein Stift vorgesehen, wobei man sich den Stift evtl.
auch sparen kann, damit die Spiegeleinheit nicht zu teuer kommt,
obwohl man, wenn es um die Verkehrssicherheit geht, auf den Preis
gar nicht achten sollte; denn kleines Konto und gesund ist besser
als viel Geld und dann im Grabe drunt.

Trotzdem sollte natürlich auch der Bearbeitungsaufwand einer Spiegeleinheit nicht zu groß sein, obwohl es zumindest in der Bundesrepublik Deutschland so viele Arbeitslose und Frührentner wegen
geistigen Gebrechens bzw. wegen im Namen des Volkes ausgesprochener, tatsachenverdrehender Richterurteile gibt.

Deshalb ist der Lagerbock 175 auf dem oberen Gehäusesteg in eine
angeformte Nut mit einem angeformten Befestigungsloch eingesetzt,
so daß dessen Lage ohne Bearbeitungsaufwand fixiert ist und er
mittels einer einzigen Schraube befestigt werden kann.

Fig. 4a zeigt den Überlauf 164 zum Wasserbehälter 77 mit einem
Schlauchanschlußnippel 183 für die Schlauchverbindung zum Behälter, welche nicht zu kurz bemessen sein sollte, damit man den Behälter auch bequem herausnehmen kann.

Der Überlauf ist stirnseitig bündig zur Gehäuseumrandung durch
ein auf dem oberen Gehäusesteg innerhalb der Wasserkammer 62 angeformtes Auge mit zentrisch angeordneter Gewindebohrung gebildet.

Fig.5 zeigt die über der Wasserkammer 162 angeordnete, in eine
Aussparung 192 des Gehäusedeckels 39 passend mit etwas Spiel
eingesetzte Klappe 160 für die Regenwasser- Auffangeinrichtung.
An der Klappe ist seitlich und ebenfalls oben bündig zum Gehäusedeckel eine Taste 184 angeformt, so daß die Klappe auch durch
Fingerdruck geöffnet bzw. in Schwenklage 160.1 (s. Fig.4) geschwenkt werden kann, um Wasser von Hand in den Wasserbehälter nachfüllen zu können, ohne daß der auf der Außenseite der Spiegeleinheit angebrachte Deckel 37 geöffnet und der Behälter herausgenommen werden muß.

Beim Nachfüllen des Wasserbehälters über die Klappe muß lediglich die Ablauföffnung 163, zusätzlich zur Klappenbetätigung über die Taste, zugehalten werden, was beides zusammen mit Daumen und Zeigefinger der linken Hand leicht zu bewerkstelligen ist.

Sobald dann das Wasser aus den Überlaufschlitzen 182 austritt u. kein Wasser mehr nachfüllbar ist, ohne daß es augenblicklich weiter ausläuft, ist dies ein Zeichen dafür, daß der in der Spiegeleinheit untergebrachte Wasserbehälter voll ist.

Wenn einem oder einer das verschüttete Wasser zu kostspielig ist oder wenn gerade kein geeigneter Nachfüllbehälter zur Hand ist, dann muß man halt den Wasserbehälter aus der Spiegeleinheit entnehmen und damit zum nächsten Wasserhahn gehen oder rennen, wenn es pressiert. Wenn es nicht pressiert und es ist ein fremder Wasserhahn, dann kann man ja bei der Gelegenheit gleich den Behälter auswaschen (soll ein Schwabenwitz u. kein Schottenwitz sein).

Fig.6 zeigt in vergrößertem Maßstab einen Ausschnitt aus Fig.2, wobei hier in Bezug auf die Ausbildung des Wischhebels 81a', der hier nur angedeutet ist, sowie des Federgelenkes 75a' eine Auführungs- Variante gegenüber Fig.2 aufgezeigt ist und zwar insofern, als in vorliegender Darstellung das Federgelenk 75a' so ausgebildet ist, daß es anstelle des in Fig.2 dargestellten, an der Ausblickscheibe 26 angeformten Stollens 48 als Anschlag für den Wischhebel dient, damit das Scheibenwischerblatt 34 beim Ausschwenken in die Ruhelage berührungsfrei zur Scheibe über der Mulde 58 gehalten ist.

Die dargestellte Ausführungs- Variante hat zwar den Vorteil, daß der Wischhebel 81a' entsprechend verkürzt werden kann, da dessen abgewinkeltes Auflaufende 47 entfällt und daß auch der Stollen an der Ausblickscheibe entfallen kann.

Nachteilig ist aber andererseits, daß die Vorspannkraft des Federgelenkes bzw. die der Scheibe angepaßte Schwenkstellung des Wischhebels 81a' beim Ausschwenken des Wischhebels in Ruhelage R nicht aufrechterhalten werden kann, weil der im Federgelenk von einem Anschlagarm 194 über einen Gewindestift 195 gebildete Anschlag während des Wischens der Scheibe 26 ja nicht wirksam sein darf, weil ja der Anpreßdruck gegen die Scheibe gerichtet sein soll,

so daß eine gewisse Schwenkfreiheit zwischen dem Schwenkteil 196 mit dem daran befestigten Wischhebel 81a'und dem Anschlagarm 194 mit dem Gewindestift 195 vorhanden sein muß.

Das heißt aber, daß der Wischhebel 81a'bzw. das daran befestigte Scheibenwischerblatt 34 beim Ausschwenken in Ruhelage R etwas in die am äußeren Rand der Ausblickscheibe angeformte Mulde 58 (s. Fig.1) einschwenkt und umgekehrt beim Einschwenken in Wischlage bzw. beim Auflaufen des Wischblattes auf die Scheibe wieder entsprechend abgeschwenkt werden muß.

Diesen Nachteil hat man bei einem ortsfest angebrachten Anschlag in der Ruheschwenkstellung des Wischhebels nicht, weil der ja entsprechend angepaßt werden kann, so daß der Wischhebel in Schwenkrichtung zur Ausblickscheibe hin gesehen beim Ausschwenken in Ruheschwenkstellung seine der Scheibe angepaßte Schwenkstellung beibehält oder, falls erwünscht,sogar etwas von der Scheibe abgeschwenkt werden kann. Bei einer Ausführung gemäß Fig.2 ist dann natürlich der in Fig.6 dargestellte Anschlagarm am Federgelenk 75a überflüssig.

Der bei einer Ausführung gemäß Fig.6 vorgesehene Gewindestift 195 für die möglichst knappe Einstellung der Schwenkfreiheit des Wischhebels soll gegen Verdrehen gesichert sein, wozu hier beispielsweise ein Schlitz in Querrichtung zur Gewindebohrung angebracht ist. Durch geringfügiges Zusammendrücken der beiden durch den Schlitz gebildeten Schenkel nach dem Gewindeschneiden werden dann die Schenkel beim Einschrauben des Gewindestiftes wieder auseinandergespreizt, so daß durch die dadurch erzeugte Spannung eine Verdrehsicherung gebildet ist.

Das Federgelenk 75a weist an seinem Festteil neben dem üblichen Schwenkauge für die Lagerung des Schwenkteiles ein Klemmstück 185 für die Befestigung am Wischbügel 33 auf.

Für die Befestigung ist eine Schwalbenschwanz- Klemmverbindung gewählt, wobei das Klemmstück 185 als Außenteil der Verbindung ausgebildet ist, während das untere Ende des Wischbügels zum dazu passenden Innenteil ausgebildet ist. Durch einen Gewindestift 186, der im unteren Ende des Bügels eingeschraubt und mit einer Spitze versehen ist, wird das Klemmstück 185 mit seinen, das Bügelende umfassenden Schrägflächen gegen die entsprechenden schwalbenschwanzförmig ausgebildeten Schrägflächen am Wischbügelende angedrückt. Dabei sollte für den Gewindestift mit Spitze eine übliche Verdrehsicherung vorgesehen sein, wie beispielsweise Loctite.

0190677

Indem nun im Klemmstück 185 eine Ansenkung angebracht ist, die gegenüber der Spitze des Gewindestiftes 186 einen geringen Versatz nach unten aufweist, wird das Klemmstück beim Festziehen des Gewindestiftes auch noch mit seiner oberen Stirnfläche gegen die durch die Schwalbenschwanz- Ausbildung am unteren Ende des Wischbügels gebildete Schulter am Übergang zum Rechteckquerschnitt des Wischbügels angedrückt.

Über der Ausblickscheibe 26 ist ein doppelwandiges Vordach angeordnet, dessen Vordachboden 83 am Deckenteil 84 des Gehäuserahmens angeformt ist und dessen Vordachdecke vom Gehäusedeckel 39 gebildet ist. Dabei ist der Vordachboden unmittelbar über der Ausblickscheibe zu einer Auffangwanne 159 für Regenwasser ausgebildet, deren Wände auf der Außenseite der Spiegeleinheit durch eine außen bündig zur Ausblickscheibe verlaufende, kreisbogenförmige Wandung 188 und auf der Innenseite durch eine gerade Wandung 86 gebildet sind, so daß die Wanne von oben gesehen die Form eines Kreissegmentes aufweist.

Der Boden 187 der Auffangwanne liegt dabei direkt auf der oberen, nicht genutzten Wandung der Ausblickscheibe 26 auf, wobei die Scheibe auf der Innenseite eine stirnseitig plane Auflagefläche aufweist und auf der Außenseite durch ihre zylinderförmig oder kegelförmig gewölbte, durchsichtige Wandung den Ausblick aus dem Vorwärtsblickspiegel gewährleistet.

Der Wischbügel 33 ist mit seinem abgewinkelten Schwenkende durch einen kreisbogenförmig verlaufenden Schlitz 117 im Vordachboden hindurchgeführt. Quer über dem Schlitz 117 sind Schlitze 158 im Gehäusedeckel 39 angebracht, durch die es auf den Vordachboden und insbesondere in die Auffangwanne hineinregnen kann.

Dabei ist am Grund der Wanne eine Auslaufbohrung 171 angeordnet, durch die das aufgefangene Regenwasser oder auch das über das Rückschlagventil 169 in die Wanne hineingepumpte Wasser schräg nach unten vor die Ausblickscheibe laufen kann.

Damit vor der Auslaufbohrung 171 eine Art Sog- oder Injektorwirkung entsteht, ist auf der Unterseite des Vordachbodens 83 ein keilförmig ausgebildeter Luftstromabweiser 168 angeformt.

Bei ansteigendem Wasserspiegel läuft das Regenwasser, wie bereits erläutert, erst durch den Überlaufschlitz 190 und dann durch den kreisbogenförmigen Schlitz 117 nach außen ab. Eine Rille 189, die am tiefsten Punkt der Wanne vom Rückschlagventil 169 zur Auslauf-

bohrung 171 hin im Wannenboden 187 eingeformt ist, sorgt dafür,
daß über das Rückschlagventil in die Wanne hineingepumptes Wasser sofort abläuft.

Die Wandung 86 ist stirnseitig bis zur Gehäuseumrandung 90 hochgezogen, so daß also der vom kreisbogenförmigen Schlitz gebildete
Wasserablauf noch reichlich unter Oberkante Wandung angeordnet
ist und keine Gefahr besteht, daß Wasser über die Wandung hinwegläuft, da es ja durch die Schlitze 158 im Gehäusedeckel unmöglich
soviel hindurchregnen kann, wie Wasser aus dem Schlitz 117 im
Vordachboden auslaufen kann.

Die Rippe 172 auf der Unterseite des Gehäusedeckels ist zum
Schutz des Wischbügels gegen äußere Gewalteinwirkung und auch als
Abweis- Maßnahme gegen Spritzwasser vorgesehen, das auf das Dekkenteil 84 gelangen könnte.

Fig.6a zeigt über der Symmetrielinie einen Schnitt durch den Rechteckquerschnitt des Wischbügels 33 über dem Festteil des Federgelenkes 75a', wobei das Federgelenk hier ohne zugehörigem Schwenkteil 196 dargestellt ist.

Unter der Symmetrielinie zeigt die Darstellung einen Schnitt direkt durch die Schwalbenschwanz- Klemmverbindung zwischen dem
Wischbügel und dem Klemmteil 185 des am Wischbügel befestigten
Festteiles vom Federgelenk.

Der Wischbügel 33, der aus einem Flacheisen gefertigt ist, weist
also an seinem Befestigungsende für das Federgelenk einen schwalbenschwanzförmigen Querschnitt mit zwei dachförmig zueinander angeordneten Seitenflächen auf, so daß das Festteil des Federgelenkes mit seinem die Seitenflächen umfassenden Klemmteil 185 von
unten her auf das Wischbügelende aufgesteckt werden kann und mittels eines Gewindestiftes 186, der hier im Bügelende eingeschraubt
ist, am Wischbügel festgeklemmt werden kann.

Dabei ist das Festteil der Federgelenkes beispielsweise aus Sinterstahl gefertigt.

Die Wirkungsweise des Federgelenkes ist ja allgemein bekannt und
in ähnlicher Weise auch bei Kippschaltern in Anwendung gebracht.
Je nach Hebelstellung erzeugt dabei ein u. dieselbe Feder in der
einen Schwenkstellung des Hebels ein Drehmoment in der einen
Schwenkrichtung und in der anderen Schwenkstellung ein Drehmoment
in der anderen Schwenkrichtung. Hier wird der Wischhebel 81a' in
dargestellter Gebrauchslage von einer Zugfeder in Schwenkrichtung

zur Ausblickscheibe hin gegen dieselbe angedrückt (s. Fig.6).
Wird nun der Wischhebel von Hand abgeschwenkt, dann bewirkt die
Zugfeder in bekannter Weise ab einem bestimmten Schwenkwinkel ein
Drehmoment in der anderen Schwenkrichtung, so daß der Wischhebel
bzw. das Schwenkteil des Federgelenkes gegen dessen Festteil angedrückt wird und festgehalten ist.

Fig.7 zeigt die Lagerung eines Halters 12c, der für die Schwenkbefestigung der Spiegeleinheit 20 an einem fortschrittlichen und
nicht rückständigen, modernen Kraftfahrzeug 13 vorgesehen ist.
Der Halter ist über eine vertikal nach unten ragende Schwenkachse
17 schwenkbar in einem seitlich am vorderen Kotflügel befestigten
Lagergehäuse 19a gelagert, wobei seine Schwenkbarkeit durch eine
Ringnut 45, in die ein axial im Lagergehäuse eingepreßter Anschlagbolzen 44 ragt, begrenzt ist, so daß zwei Endschwenkstellungen gebildet sind.
Während nun die eine Endschwenkstellung die in Fig.1 u.8 dargestellte Gebrauchslage der Spiegeleinheit bestimmt, ist durch die
andere Endschwenkstellung die Ausschwenklage der Spiegeleinheit
gegeben.
In beiden Endschwenkstellungen ist eine übliche Einrastvorkehrung
getroffen, die hier durch eine Kugel‾155‾gebildet ist, welche in einer im Lagergehäuse angebrachten Bohrung axial geführt ist und
durch eine Druckfeder gegen die untere Stirnseite eines fest auf
der Schwenkwelle 17 aufgebrachten Flansches 17b angedrückt wird.
Dabei sind auf der unteren Stirnseite des Flansches 17b zwei Ansenkungen 46 so angebracht, daß die Kugel in den beiden von der
Ringnut 45 gebildeten Endschwenkstellungen jeweils in eine der
beiden Ansenkungen einrastbar ist.
Zwecks Befestigung des Halters 12c auf der Schwenkachse 17 bzw.
deren Flansch 17b ist am Halter ein Flansch angeformt, der auf
dem Flansch 17b der Schwenkwelle zentriert und durch Schrauben
154 befestigt ist. Dabei sind die Schrauben als Schaftschrauben
154 mit einer Anschlagschulter über dem Gewindeauslauf ausgebildet und im Halter bzw. dessen Befestigungsflansch Ansenkungen angebracht, um zwischen den Schaftschrauben und den zyl. Ansenkungen
elastische Buchsen 153 aus Gummi od. dgl. unterzubringen, über
die der Halter mittels der Schaftschrauben gegen die obere Stirnseite des Flansches 17b ausreichend fest angedrückt ist.
Durch die Buchsen 153 sollte eigentlich nur eine in Umfangsrich-

tung etwas nachgiebige Verbindung zwischen dem Halter 12c und dem Flansch 17b geschaffen oder wenigstens angedeutet sein, damit die Spiegeleinheit bei äußerer Gewalteinwirkung vor allem in der Gebrauchslage etwas nachgibt, jedoch so, daß sich ihre Stellung dabei nicht bleibend verändert. Das heißt, die elastischen Buchsen müßten in Umfangsrichtung nachgiebig ausgebildet und gleichzeitig formstabil sein, wobei dann die Spiegeleinheit und auch der Anschlagbolzen 44 gegenüber Stoßbelastungen bei äußerer Gewalteinwirkung etwas geschützt wäre.

Zwischen den Flanschen des Halters und der Schwenkwelle sowie dem am Lagergehäuse angeformten Flansch sind am Umfang Überstände bzw. Ansätze angedreht, die labyrinthartig ineinandergreifen, um deren Stirnseiten vor Schmutz und Spritzwasser zu schützen.

Am unteren Ende der Schwenkachse 17 ist nun ein Flansch oder Hebel 148 , in den ein parallel zur Schwenkachse versetzter Mitnehmerbolzen 147 eingepreßt ist, fest auf der Schwenkachse aufgebracht. Dabei ragt der Mitnehmerbolzen 147 vertikal nach unten in eine Ringnut 146 einer Schwenkscheibe 145, welche lose schwenkbar auf einem am unteren Ende der Schwenkachse angedrehten Zapfen gelagert und axial gesichert ist.

Die Schwenkachse 17 ist hier in axialer Richtung über ihren Flansch 17b und den Hebel 148 durch ihre in die erforderliche Lagerbohrung jeweils gegen eine Schulter eingepreßten wartungsfreien Lagerbuchsen mit etwas Spiel festgehalten.

In die Schwenkscheibe 145 ist nun parallel zur Schwenkachse versetzt ein Bolzen 144, an dem ein Pleuel 143 angelenkt ist, eingeschraubt. Dabei bildet die Schwenkscheibe 145 den Schwenkteil eines üblichen Kurbeltriebes, bei welchem hier die rotierende Bewegung eines Kurbelbolzens 142 über ein Pleuel 143 und über den Bolzen 144 in eine Schwenkbewegung der Schwenkscheibe 145 umgesetzt wird.

Der Kurbelbolzen 142 ist parallel zur Längsachse einer Kurbelscheibe 141 versetzt in dieselbe eingeschraubt, wobei die Kurbelscheibe eine zentrisch zu ihrem Umfang angebrachte Aufnahmebohrung aufweist, über die sie direkt auf der Antriebswelle eines Getriebemotors 140 fest aufgebracht ist. Symmetrisch zum Kurbelbolzen 142 versetzt sind nun zwei um 180 Grad versetzte Einbuchtungen 151 u. 152 am Umfang der Kurbelscheibe angebracht, über welche die Drehbewegung der Kurbelscheibe nach jeweils einer hal-

ben Umdrehung mittels eines Microschalters 149 unterbrochen werden kann (s. Fig.8).

Der mit einer motorseitigen Flanschauflage versehene Getriebemotor 140 ist von unten her auf einer am Lagergehäuse 19a angeformten Stirnplatte 197 aufgeflanscht, wobei die Stirnplatte einen
Durchbruch aufweist, durch welchen der Antriebsmotor des Getriebemotors nach oben hindurchragt.

Zwecks Abdeckung des Kurbeltriebes ist am Umfang der Stirnplatte
eine Umrandung 198 angeformt, die auf der Rückseite zum Kotflügel
hin zu einem Flansch 199 ausgebildet ist, der sich bis über die
Oberkante des Getriebemotors erstreckt und der zur Befestigung
des Lagergehäuses 19a am Kotflügel 107 (s. Fig.8) dient.

Durch den Flansch 199 ist außerdem eine rückwärtige Wandung für
die Abkapselung des Getriebemotors gebildet.

Für die restliche Abdeckung des Getriebemotors ist dann eine
Blechhaube 157 vorgesehen, welche dem Lagergehäuse in Draufsicht
gesehen ein rechtwinkliges Aussehen verleiht und welche von unten
gesehen (s. Fig.8) der Außenform der Umrandung 198 bündig angepaßt ist.

Auf der Unterseite ist der Kurbeltrieb durch einen der Umrandung
bündig angepaßten Lagerdeckel 156 abgedeckt, wobei für die Kotflügel- seitige Begrenzung des Lagerdeckels ein Absatz 200 im Befestigungsflansch 199 des Lagergehäuses vorgesehen ist, so daß
der Flansch mit seiner unteren Stirnseite bündig zum Lagerdeckel
anschließt.


Fig.8 zeigt den Schwenkmechanismus für den Halter 12c mit einer
in eingezeichneter Pfeilrichtung angetriebenen Kurbelscheibe 141
von unten bei abgenommenem Lagerdeckel 156.

Über die beiden am Umfang der Kurbelscheibe angebrachten Einbuchtungen 151 u. 152 wird nach Ingangsetzung des Getriebemotors 140
jeweils nach einer halben Umdrehung der Kurbelscheibe der Selbsthaltekontakt für die Stromzufuhr zum Getriebemotor 140 über den
Microschalter 149 unterbrochen, so daß also der Kurbelbolzen 142
der Kurbelscheibe entweder in der Stellung 142 oder in der Stellung 142.0 zum Stillstand kommt.

In dargestellter Gebrauchslage des Halters 12c, die auch der Gebrauchslage der Spiegeleinheit entspricht, steht der Kurbelbolzen
immer in der Stellung 142.

Bei Entriegelung der Fronthaube wird nun der Getriebemotor über

einen Impuls O (= open, damit es auch die Amerikaner verstehen)
in Gang gesetzt und nach einer halben Umdrehung der Kurbelscheibe durch die Einbuchtung 151 wieder zum Stillstand gebracht.
Dabei wird der Kurbelbolzen von der Stellung 142 über die Stellung 142.1 in die Stellung 142.0 geschwenkt und der Schwenkbolzen
144 der Schwenkscheibe 145 wird über die Pleuelstange 143 von der
Stellung 144 in die Stellung 144.1 und wieder zurück in Ausgangslage 144 geschwenkt.
Durch das Ausschwenken des Schwenkbolzens in die Stellung 144.1
wird der Mitnehmerbolzen 147 über die Ringnut 146 der Schwenkscheibe von der Stellung 147 in die Stellung 147.1 geschwenkt,
wodurch der in verdrehfester Verbindung zum Mitnehmerbolzen stehende Halter 12c in die Ausschwenklage 12c.1 ausgeschwenkt wird,
wo der Halter dann einrastet.
Durch das Zurückschwenken des Schwenkbolzens 144 bzw. der Ringnut
146 in Ausgangslage gibt die Ringnut den Mitnehmerbolzen wieder
frei und bringt sich gleichzeitig mit ihrer entgegengesetzt wirkenden Anschlagfläche wieder in Anschlagstellung zum Mitnehmerbolzen in seiner Schwenkstellung 147.1.
Dadurch kann der Halter, falls erforderlich oder gewollt, auch
von Hand wieder eingeschwenkt werden.
Geht man nun von der Ausschwenklage 12c.1 des Halters aus, wo also
der Kurbelbolzen in der Stellung 142.0, der Schwenkbolzen in seiner Ausgangslage 144 und der Mitnehmerbolzen in Schwenkstellung
147.1 stehen, dann wird der Getriebemotor 140 beim Zuklappen der
Fronthaube durch einen Impuls C (= closed) erneut in Gang gesetzt
und diesesmal über die Einbuchtung 152 zum Stillstand gebracht.
Dabei wird der Kurbelbolzen von der Stellung 142.0 über die Stellung 142.2 in die Stellung 142 geschwenkt und der Schwenkbolzen
wird über die Pleuelstange von der Stellung 144 in die Stellung
144.2 und wieder zurück in Ausgangslage 144 geschwenkt.
Durch das Ausschwenken des Schwenkbolzens in die Stellung 144.2
wird der Mitnehmerbolzen über die Ringnut der Schwenkscheibe von
der Stellung 147.1 wieder in die Stellung 147 zurückgeschwenkt
und der Halter somit wieder in Gebrauchslage 12c gebracht, wo er
wieder einrastet.
Um die beiden Stellungen 142 und 142.0 des Kurbelbolzens und damit Gebrauchslage 12c und Ausschwenklage 12c.1 des Halters steuerungstechnisch unterscheiden zu können, ist ein zweiter Microschalter 150 vorgesehen, der nur in der Stellung 142 des Kurbel-

bolzens von der Pleuelstange 143 betätigt ist.

Dadurch wird es ermöglicht, daß nur ein Impuls "O" das Ausschwenken des Halters und nur ein Impuls "C" das Einschwenken des Halters bewirken kann, wodurch beispielsweise verhindert ist, daß
man die Spiegeleinheiten durch eine weitere Betätigung der Entriegelung, die für die Fronthaube vorgesehen ist, bei geöffneter Motorhaube wieder einschwenkt.

Wird nun eine der beiden am Fahrzeug angebrachten Spiegeleinheiten nach dem Zuklappen der Fronthaube beispielsweise von einem
bösen Buben wieder ausgeschwenkt, dann muß sie, falls keine Möglichkeit für eine Fernsteuerung von Hand gegeben ist, auch von
Hand wieder eingeschwenkt werden. Ein Einschwenken per Fernsteuerung ist natürlich auch möglich, wobei jedoch der Kurbelbolzen
erst in Ausschwenklage 142.0 gebracht werden muß, um die Spiegeleinheit dann bei gleicher Drehrichtung der Kurbelscheibe einschwenken zu können, was also zwei halbe Umdrehungen der Kurbelscheibe erfordert. Ein sofortiges Einschwenken durch Drehrichtungswechsel über eine halbe Umdrehung der Kurbelscheibe ist nicht
möglich, weil dann der Kurbelbolzen in falscher Ausgangsposition
stehen würde. Die Drehrichtung muß also unbedingt beibehalten werden.

Ist der erforderliche Schwenkwinkel 12c- 12c.1 des Halters $= \sigma$,
dann sollte der Fräswinkel für die Ringnut $= \sigma + 2\sigma_0$ sein, damit
die Endschwenkstellungen des Halters auch mit Sicherheit von der
Ringnut 45 im Flansch 17b bestimmt sind, wobei in $\sigma_0$ sämtliche
Fertigungstoleranzen enthalten sind, die das erforderliche Spiel
zwischen den Anschlagflächen beeinflussen bzw. verunmöglichen
könnten. Der über den Kurbeltrieb zu erbringende Schwenkwinkel
der Schwenkscheibe 145 zwischen den Stellungen 144.1 u. 144.2
des Schwenkbolzens 144 muß dann $2(\sigma + \sigma_0)$ betragen.

Zusammenfassend sei noch erwähnt, daß es natürlich noch vieles
gibt, was man so oder so und sicher auch noch besser machen kann.
Beispielsweise kann man auch über der Einblickscheibe 25 ein
ähnliches Vordach anbringen, wie in Fig.3 über dem Rückblickspiegel 10 dargestellt, wobei das Vordach dann am Deckenteil 82 des
Gehäuserahmens 60 angeformt ist. Dabei sollte die Einblickscheibe außen möglichst bündig in den Gehäuserahmen eingesetzt sein,
damit sie leichter gereinigt werden kann und damit keine Schmutzwinkel an deren Einfassung gebildet sind (siehe Darstellg. Fig.1).

Unter Umständen ist es vielleicht auch angebracht, Vorkehrungen
zu treffen, damit das in der Auffangwanne 159 (siehe Fig.6) angesammelte Regenwasser beim Abbremsen und Anfahren des Kraftfahrzeuges nicht so leicht aus der Wanne schwappt. Beispielsweise
würde hier ein in der Wanne angebrachter Gitterrost, ähnlich wie
man ihn zur Herstellung von Eiswürfeln verwendet, schon Abhilfe
verschaffen, um nur eine der zahlreichen Möglichkeiten zu nennen.
Bei der Ausführung des Schwenkantriebes für den Halter 12c entsprechend der Darstellung Fig.7 dürfte es sinnvoller sein, statt
der beiden Labyrinthabdichtungen zwischen den Flanschen des Halters und der Schwenkachse 17, sowie dem am Lagergehäuse 19a angeformten Flansch eine Schutzhülse am Flansch des Halters über einen Zentrieransatz zu befestigen, wobei die Schutzhülse dann über
den Flansch der Schwenkachse hinweg bis zum Flanschansatz des Lagergehäuses heruntergezogen nur eine Labyrinthabdichtung bilden
würde und wobei der Ansatz, sowie der Überstand am Flansch 17b
der Schwenkachse entfallen würden.
Um die Anschlußklemmen für die elektrische Verdrahtung leicht zugänglich im Antriebsraum 170 der Spiegeleinheit unterzubringen,
ist es zweckmäßig, auf der Außenseite der Spiegeleinheit zwei
nach unten abklapp- und verschließbare Deckel zwischen den beiden
Gehäusestegen anzubringen, wobei ein Deckel auf der Vorwärtsblickspiegelseite und ein Deckel auf der Rückblickspiegelseite jeweils
schwenkbar am unteren Gehäusesteg befestigt ist und wobei der vordere Deckel auf der Innenseite die Anschlußklemmen aufmontiert
hat, während der hintere Deckel den vorderen seitlich überlappt
und für die Herausnahme des Wasserbehälters gedacht ist.
Verschließbar muß dann nur der Deckel für die Herausnahme des Wasserbehälters sein, da er ja den Deckel mit den Anschlußklemmen
überlappt und demzufolge mit verschließt, so daß für den zusätzlich erforderlichen Verschluß des Deckels mit den Klemmen eine
oder zwei Schrauben, über die der Deckel am oberen Gehäusesteg
festschraubbar ist, genügen, um zu verhindern, daß der Deckel
nach unten aufklappt, wenn der Deckel für den Wasserbehälter geöffnet wird.
Der Wischbügel 33 (siehe Fig.1) ist über eine Festnabe auf der
Achse 32 fest aufgebracht, während die Schwinge 31a über eine Losnabe lose schwenkbar um die Achse 32 gelagert ist, wobei die beiden Naben zur Verbreiterung der Führung auf der Achse dienen.

Veranschaulicht ist dies in mindestens einer der vorhergehenden Zusatzanmeldungen, falls dazu irgendwelche Unklarheiten bestehen sollten.

Falls es nicht möglich sein sollte, den Wasserauslauf aus der Auffangwanne 159 (s. Fig.6) bei höherer Fahrgeschwindigkeit durch den Luftstromabweiser 168 zu verstärken, würde auch ein vertikaler Schlitz statt einer Auslaufbohrung 171 dafür sorgen, daß bei ansteigendem Wasserspiegel mehr Regenwasser aus der Wanne ausläuft. Dies ist nicht deshalb anzustreben, weil bei höherer Fahrgeschwindigkeit mehr Regenwasser in die Wanne hineingelangt, sondern weil bei stärkerem Fahrtwind das auslaufende Wasser schneller von der Scheibe weggeblasen wird. Welche Form des vertikalen Schlitzes hier am günstigsten ist (nach oben schmäler oder breiter werdend bzw. gleichbleibend breit), müssen natürlich Versuchsergebnisse erbringen.

Zweckmäßigerweise sollte in der Auffangwanne auch eine Überlaufbohrung oder Öffnung zur Mulde 58 der Ausblickscheibe 26 hin angebracht sein, damit die Mulde vom Regenwasser sauber gehalten wird. Die Überlauföffnung zur Mulde hin sollte dann etwas unterhalb des Überlaufschlitzes 190 in der Wanne angebracht sein.

Auch dürfte es nicht unzweckmäßig sein, eine zusätzliche Blinkleuchte auf der Außenseite der jeweiligen Spiegeleinheit anzubringen, wobei dieselbe am besten auf dem Deckel, der für die Anschlußklemmen vorgesehen ist, aufmontiert sein dürfte.

Wenn jemand auch noch Geld für die zuweilen verführerisch hübschen Polizei- Hostessen übrig hat, dann könnte der Deckel auch mit einer speziellen Parkuhr (Qu-arzuhr) ausgerüstet werden, wobei die Parkuhr automatisch so funktionieren müßte, daß die jeweils zuständige Hostesse nur noch abzulesen braucht, wielange das Kraftfahrzeug schon in der blauen Zone parkt. Die Uhr müßte dann, sobald man den Zündschlüssel abzieht, von Null an beginnend automatisch die Minuten bzw. Stunden des Fahrzeugstillstandes aufzeigen und nach einer bestimmten Maximalzeit selbständig abschalten. Während der Fahrt, bei eingestecktem Zündschlüssel, ist sie natürlich außer Betrieb und zeigt nichts an. Auf der Uhr kann ein Fahrer beispielsweise auch ablesen, wielange er bei einer Geschäftskollegin oder im Wirtshaus (beim Essen) war, wobei es allerdings passieren kann, daß seine Gemahlin auch mal die Uhr abliest. Deshalb dürfte es zweckmäßig sein, im Innenraum des Fahrzeuges einen Schalter anzubringen, damit man sie auch ganz abstellen kann.

Das Gehäuse 11 und der Gehäusedeckel 39 der Spiegeleinheit, sowie das Lagergehäuse 19a für die Schwenklagerung des Halters 12c sind als Gußteil ausgebildet, wobei eine Aluminiumgußlegierung nach DIN 1725 wie beispielsweise G-AlSi 12 in Frage kommt. Bei größeren Stückzahlen, wenn an eine Herstellung im Druckgußverfahren gedacht werden kann, dürfte GD-AlMg 9 in Frage kommen.

Zumindest beim Gehäuse und beim Gehäusedeckel ist auch an eine Herstellung im Spritzgußverfahren zu denken, wobei sich hier Polyuretan oder Polyamid eignen dürfte und wobei man sich hier evtl. Lagerbuchsen für die Schwenklagerung des Scheibenwischerblattes und der Spiegeleinheit sparen könnte.

Der Boden 89 des Gehäuseramens 60 ist unterhalb der Einblickscheibe, einen Absatz bildend, etwas hochgezogen, jedoch nur soweit, daß auch für einen klein gewachsenen Fahrer 3 die ganze Spiegelfläche des Einblickspiegeleinsatzes noch sichtbar ist.

Das vom Fahrer 3 aus durch die Windschutzscheibe hindurch sichtbare Deckenteil 82, welches von der Abdeckung durch den Gehäusedeckel zweckmäßigerweise ausgenommen ist, verläuft entsprechend dem Einblickwinkel eines groß gewachsenen Fahrers schräg nach unten, so daß der Ausblick über das Deckenteil hinweg nicht unnötig eingeschränkt ist, wobei natürlich auch für einen groß gewachsenen Fahrer die ganze Spiegelfläche einsehbar sein sollte.

Um zu verhindern, daß Spritzwasser auf den oberen Gehäusesteg gelangt, sind auf dem vom Gehäusedeckel abgedeckten Deckenteil 84 des Gehäuserahmens kreisbogenförmig um die Schwenkachse 32 des Scheibenwischerblattes verlaufende Rippen 97 bis knapp unter den Wischbügel 33 hochgezogen. Falls diese Maßnahme nicht genügen sollte, kann zwischen den Rippen auch ein Schutzwall ähnlich einer Bürste mit nach oben gerichteten, bis zur Wandung des Gehäusedeckels reichenden Borsten angebracht werden, wobei der Schutzwall natürlich aus geeignetem Synthetikmaterial gefertigt sein kann.

Erwähnenswert ist noch, daß die Spiegeleinheit bei dargestelltem Halter und dargestelltem Schwenkwinkel des Halters im ausgeschwenkten Zustand wieder etwas über den Kotflügel bzw. in den Schwenkbereich der Fronthaube einschwenkt, wenn die Fronthaube so breit ist wie das Fahrzeug. In diesem Fall muß dann die Türe geschlossen sein, wenn man die Fronthaube auf- oder zuklappt, wobei es auch hier mehrere Möglichkeiten gibt, um diesen Umstand zu umgehen.

Beispielsweise kann man die Achse 18, um welche die Spiegeleinheit schwenkbar gelagert ist, noch weiter ausschwenken wie dies
bei dem in Fig.8 dargestellten Schwenkwinkel 12c- 12c.1 des Halters 12c und der in Fig.1 dargestellten Hebellänge 17- 18 des
Halters der Fall ist. Oder man kann den Halter 12c gelenkig ausbilden, indem man ungefähr dort, wo in Fig.1 dessen Kröpfung eingezeichnet ist, eine vertikal angeordnete Schwenkachse anbringt,
wobei dann der Halter zweiteilig wäre und wobei dann allerdings
verhindert werden müßte, daß die Spiegeleinheit beim Öffnen der
Fahrertüre nach innen um die Achse 18 geschwenkt wird, da hier anzustreben wäre, daß die Achse 18 beim Öffnen der Türe um die anstelle der Kröpfung vorgesehene, vertikale Achse des zweiteiligen
Halters geschwenkt wird. Das ist aber kostspieliger und weniger
stabil, so daß Fahrzeugherstellern, die durch eine besonders breite Motorhaube einen besonders starken Motor vortäuschen wollen
oder andere Gründe dafür haben, weswegen sie die Motorhaube bis
zum äußersten Rand des Fahrzeuges hinausziehen, geraten ist, in
diesem Falle die Motorhaube im Bereich der Spiegeleinheiten ein
klein wenig auszunehmen bzw. zweckdienlich und formschön zu verschmälern.
Die Spiegelfläche des Ausblickspiegeleinsatzes 2 ist, den Blick
des Fahrers in horizontale Fahrtrichtung weisend, entsprechend
fixiert und nicht einstellbar ausgeführt am Gehäuserahmen aufgeflanscht, während die Spiegelflächen des Einblickspiegeleinsatzes
1 und des Rückblickspiegels 10 in üblicher Weise in ihrer Schräglage einstellbar sind und zwar zweckmäßigerweise ferngesteuert.
Der Einfachheit wegen ist die Spiegelfläche 1 in Fig.3 in horizontale Richtung weisend eingezeichnet, was auch in etwa die umgelenkte Blickrichtung des Fahrers von der Spiegelfläche 1 zur
Spiegelfläche 2 veranschaulicht bzw. derselben sogar genau entspricht, wenn beide Spiegel in gleicher Höhe angeordnet sind.
In Wirklichkeit weist die Spiegelfläche 1 natürlich entsprechend
dem nach unten gerichteten Blick des Fahrers schräg nach oben.
Die strichpunktierte Linie vor der Spiegelfläche 1 soll lediglich
deren Schräglage um ihre vertikale Schwenkachse andeuten.
Sofern der Antriebsraum 170 auf der Innenseite der Spiegeleinheit
zwischen den beiden Gehäusestegen 42 u. 43 durch einen Deckel abgedeckt ist, könnte auch auf dessen Innenseite elektrischer Zubehör aufmontiert werden,- mit Stromanschluß bzw. Kabelverbindung
zum Kraftfahrzeug zweckmäßigerweise.

Daß es zweckmäßig ist, den direkten Durchblick durch den Vorwärtsblickspiegel bzw. dessen Ausblickwandung zu verhindern, wurde bereits in der Hauptanmeldung (deren Prioritätsfrist aufgrund eines
eindeutigen Mordanschlages verstrichen ist) erkannt.

Da wurde der direkte Durchblick durch einen, aus mehreren kleinen
Vorwärtsblickspiegeln bestehenden Vorwärtsblickspiegel durch Blenden verhindert.

Am Gehäuse des mit einem Rückblickspiegel kombinierten Vorwärtsblickspiegels sind noch keine Vorkehrungen getroffen, um die Ausblicköffnung abzudecken, weil dasselbe damals noch in der embryonalen Entwicklung stand.

Bereits in der ersten Zusatzanmeldung jedoch wurde eine, die Einblicköffnung für die Einblickscheibe 25 auf der Außenseite des
Kraftfahrzeuges verengende Wandung 76 mit an den Gehäuserahmen 60
angeformt, um einen direkten Durchblick durch den Gehäuserahmen
vom Fahrer aus gesehen zu verunmöglichen. Auch eine Lagerbohrung
für die Lagerung der Schwenkachse 32 des Scheibenwischerblattes
34 und eine Lagerbohrung für die Schwenklagerung der Spiegeleinheit um die Achse 18 eines Halters sind hier schon in der Wandung
angebracht.

Für die Abdeckung des Scheibenwischerantriebes ist auch schon ein
Gehäusedeckel 39 vorgesehen, der über der Ausblickscheibe ein Vordach bildet und der in einer weiteren Zusatzanmeldung so ausgebildet ist, daß er die Decke des Gehäuserahmens 60 in ein vom Gehäusedeckel abgedecktes Deckenteil 84 und ein vom Gehäusedeckel nicht
abgedecktes Deckenteil 82 unterteilt, wobei der Gehäusedeckel mit
seiner Umrandung außen bündig plan auf der Stirnseite einer Gehäuseumrandung aufliegt und wobei der obere Gehäusesteg gegenüber dem
Gehäuserahmen bzw. dessen Deckenteil 84 einen Versatz nach oben
und der untere Gehäusesteg gegenüber dem Gehäuserahmen bzw. dessen
Boden 89 einen Versatz nach unten aufweist.

Auch an ein am Gehäuserahmen angeformtes Vordach ist hier schon
gedacht, bloß noch nicht an ein doppelwandiges.

Dasselbe folgte erst in einer weiteren Zusatzanmeldung, wo es mehr
darum ging, das Ausschwenken des Scheibenwischerblattes während
des Wischens in dessen Ruheschwenkstellung über der Mulde zu verhindern, so daß an Schlitze im Gehäusedeckel, durch die es hindurchregnen kann, noch nicht gedacht war, weil man ja nicht
gleichzeitig an alles denken und nebenher noch Kriminalfälle lösen kann ( bei einem 12- Stundentag als "Hausfrau" ).

Die Kurbelscheibe 27 für den Scheibenwischerantrieb, welche direkt auf der durch den oberen Gehäusesteg hindurchragenden Antriebswelle des Getriebemotors 53 aufgesetzt ist, weist an ihrem Umfang ebenfalls eine Einbuchtung auf, um im Zusammenwirken mit einem auf dem oberen Gehäusesteg befestigten Microschalter nach dem Abstellen des Scheibenwischerantriebes in üblicher Weise den Stillstand des Getriebemotors in der Ruheschwenkstellung des Scheibenwischerblattes über der in Anformung an den Gehäuserahmen in die Ausblickscheibe eingeformten Mulde einzuleiten (siehe Fig.1).

Während also der Stillstand des Getriebemotors nach dem Abstellen des Wischantriebes erst durch den Microschalter in die Wege geleitet wird, sollte die Außerbetriebsetzung des Hubmagneten 112a, der das Ausschwenken des Scheibenwischerblattes während des Wischens in dessen Ruhelage verhindert, gleichzeitig mit dem Abstellen des Wischantriebes erfolgen, so daß der Wischbügel 33 nicht erst gegen die vom Hubmagneten in Anschlagstellung 130 gehaltene Klinke 124 anschlägt.

Die über die Schwenkwelle 126 schwenkbar in den Gehäusestegen 42 u. 43 gelagerte Klinke sollte in Anschlagstellung möglichst senkrecht mit ihrer Längsrichtung zur Längsrichtung des Wischbügels stehen, damit die Anpreßkraft der Druckfeder 128 gegen die Schwenkwelle gerichtet ist und nicht den Hubmagneten 112a belastet.

Der Gelenkhebel 21 für die Schwenkbetätigung der Spiegeleinheit weist an seinen Enden handelsübliche Gelenkverbindungen auf, die außer einer horizontalen Schwenkbarkeit des Hebels auch eine gering erforderliche Schwenkbarkeit des Hebels in vertikaler Richtung zulassen. Seine Länge ist erforderlichenfalls einstellbar.

Der als Anschlag für den Wischhebel 81a in dessen Ruheschwenkstellung wirkende, an der Ausblickscheibe angeformte Stollen 48 könnte auch am Gehäuserahmen angeformt oder befestigt und einstellbar ausgeführt sein, wobei über das abgewinkelte Ende 47 des Wischhebels auch ein Gleitschuh mit besonderen Gleiteigenschaften gestülpt sein kann und wobei das Auflaufende auch entsprechend präpariert sein kann (siehe Fig.2).

Was den für das Ausschwenken der Spiegeleinheit vorgesehenen Getriebemotor betrifft, ist noch erwähnenswert, daß dessen Nachlauf möglichst gering sein sollte, was beispielsweise durch eine möglichst hohe Getriebeuntersetzung erreicht werden könnte.

SCHUTZANSPRÜCHE

1) VORWÄRTSBLICKSPIEGEL nach P 34 42 078.9 (G 84 33 731.1)
zur Umlenkung der Blickrichtung von einer Ausscherrichtung
in die Fahrtrichtung eines Kraftfahrzeuges mit zwischen Einblick- u. Ausblickspiegeleinsatz angeordneter, in Durchblickrichtung durch durchsichtige Wandungen vor Staub u. Wasser
geschützter Kammer, wobei die Spiegeleinsätze von außen her
in seitliche Aussparungen eines geschlossenen Gehäuserahmens
in Rechteckform eingesetzt sind u. wobei der Vorwärtsblickspiegel einen oberen und einen unteren Gehäusesteg aufweist,
auf deren Stirnflächen ein üblicher Rückblickspiegel angeflanscht ist und wobei auch schon ein Halter für die Befestigung der Spiegeleinheit am vorderen Kotflügel vorgesehen
ist,
d a d u r c h   g e k e n n z e i c h n e t ,
daß auf der Einblickseite des Gehäuserahmens (60) eine die
Rahmenöffnung für den Einsatz einer Einblickscheibe (25) auf
der Außenseite eines Kraftfahrzeuges (13) verengende Wandung
(76) angeformt ist, so daß die Wandung vom Fahrer (3) aus in
Ausscherrichtung (a) gesehen eine auf der Ausblickseite des
Gehäuserahmens eingesetzte Ausblickscheibe (26) verdeckt und
einen direkten Durchblick durch dieselbe verhindert (Fig. 1
u. Hauptanmeldung Fig.3)

2) VORWÄRTSBLICKSPIEGEL nach Anspruch 1
d a d u r c h   g e k e n n z e i c h n e t ,
daß die Spiegelfläche des Ausblickspiegeleinsatzes (2), den
Blick des Fahrers (3) in horizontale Fahrtrichtung weisend,
entsprechend fixiert und nicht einstellbar ausgeführt am Gehäuserahmen (60) angeflanscht ist, während die Spiegelflächen des Einblickspiegeleinsatzes (1) und des Rückblickspiegels (10) in üblicher Weise in ihrer Schräglage einstellbar
ausgeführt sind und daß die Spiegeleinsätze (1 u. 2), sowie
die Scheiben (25 u. 26) in üblicher Weise abdichtend auf den
Gehäuserahmen aufgeflanscht bzw. in den Rahmen eingesetzt
sind, so daß eine hermetisch abgeschlossene Kammer (57) innerhalb des Gehäuserahmens gebildet ist, wobei die Spiegeleinsätze bzw. deren Spiegelflächen und die Scheiben rechtwinklig oder annähernd rechtwinklig ausgebildet sind

3) VORWÄRTSBLICKSPIEGEL nach Anspruch 1
d a d u r c h   g e k e n n z e i c h n e t ,
daß in der, die Einblicköffnung des Gehäuserahmens (60) verengenden Wandung (76) eine die Wandung in vertikaler Längsrichtung durchdringende Lagerbohrung für die Schwenklagerung
einer Achse (32) angebracht ist, wobei am freien Ende der
Achse ein Wischbügel (33) befestigt ist und wobei der Wischbügel an seinem abgewinkelten Schwenkende über ein übliches
Federgelenk (75a, 75a') einen Wischhebel (81a, 81a') mit einem schwenkbar am Wischhebel befestigten Scheibenwischerblatt
(34) trägt und daß das Scheibenwischerblatt über das Federgelenk und den Wischhebel gegen eine um die Achse (32) gewölbte Ausblickscheibe (26) angedrückt ist (Fig.1 u. 2)

4) VORWÄRTSBLICKSPIEGEL nach Anspruch 3
d a d u r c h   g e k e n n z e i c h n e t ,
daß am äußeren Rand der gewölbten Ausblickscheibe (26) in
der Ruheschwenkstellung (R) des Scheibenwischerblattes (34)
eine Mulde (58) in Anpassung an den Gehäuserahmen (60) in die
Scheibe eingeformt ist, wobei das Einschwenken des Scheibenwischerblattes in die Mulde durch einen an der Scheibe oder
am Gehäuserahmen angeformten oder befestigten Stollen (48)
oder einen am Festteil eines Federgelenkes (75a') angeformten
Anschlagarm (194) verhindert ist, indem der Stollen oder der
Anschlagarm einen Anschlag für den Wischhebel (81a, 81a') in
dessen Ruheschwenkstellung bzw. der Ruheschwenkstellung des
Scheibenwischerblattes bildet (Fig.1, 2 u. 6) .

5) VORWÄRTSBLICKSPIEGEL nach Anspruch 3 u. 4
d a d u r c h   g e k e n n z e i c h n e t ,
daß der Wischbügel (33) relativ schwenkbar zu einer um seine
Achse (32) lose schwenkbar gelagerten Schwinge (31a) gelagert
und durch eine Druckfeder (128) gegen einen Festanschlag (131)
der Schwinge angedrückt ist, wobei sich die Druckfeder einerseits über den Wischbügel gegen den Festanschlag der Schwinge
und andererseits gegen eine an der Schwinge angeformte Lasche
(139) abstützt und wobei die Schwinge in üblicher Weise über
einen Kurbeltrieb (27, 29) mittels eines Getriebemotors (53)
in Schwenkbewegung versetzbar ist (Fig.1 u. 3)

6) VORWÄRTSBLICKSPIEGEL nach Anspruch 3, 4 u. 5

d a d u r c h   g e k e n n z e i c h n e t ,

daß das Ausschwenken des Wischbügels (33) in die Ruheschwenkstellung (R) des Scheibenwischerblattes (34) nach Inbetriebsetzung des Scheibenwischerantriebes in einer nächst der Mulde (58) liegenden Schwenkstellung (T1) des Scheibenwischerblattes durch eine Klinke (124) verhindert ist, indem die
Klinke entgegen der Krafteinwirkung der zwischen der Schwinge
(31a) und dem Wischbügel angeordneten Druckfeder (128) einen
Anschlag für den Wischbügel bildet, wobei die Klinke zweckmässigerweise schwenkbar über eine vertikal angeordnete Schwenkwelle (126) in den Gehäusestegen (42, 43) des Gehäuses (11)
gelagert und durch einen im Antriebsraum (170) der Spiegeleinheit (20) untergebrachten, drückend wirkenden Hubmagneten
(112a), der gegen einen auf der Schwenkwelle befestigten Ausklinkhebel (125) angestellt ist, in Anschlagstellung (130)
zum Wischbügel gebracht ist, während eine in entgegengesetzter Wirkrichtung zum Hubmagneten gegen den Ausklinkhebel angestellte Druckfeder (113a) nach Außerbetriebsetzung des
Scheibenwischerantriebes bzw. des Hubmagneten das Ausschwenken der Klinke aus dem Schwenkbereich (R-T2) des Wischbügels
bzw. das Einschwenken der Klinke in eine Ausklinkung (129)
des Wischbügels bewirkt, so daß der Wischbügel dann über die
Schwinge bzw. über die zwischen der Schwinge und dem Wischbügel angeordnete Druckfeder in die Ruheschwenkstellung des
Scheibenwischerblattes ausschwenkbar ist (Fig.1)

7) VORWÄRTSBLICKSPIEGEL nach Anspruch 1 u. 4 bis 6

d a d u r c h   g e k e n n z e i c h n e t ,

daß das Gehäuse (11) der Spiegeleinheit (20) als Gußteil ausgebildet ist und der untere Gehäusesteg (43) gegenüber dem
Gehäuserahmen (60) einen Versatz nach unten aufweist, während
der obere Gehäusesteg (42) gegenüber dem Gehäuserahmen einen
Versatz nach oben aufweist und daß zwischen den Gehäusestegen
der Getriebemotor (53), sowie ein Wasserbehälter (77, 78) und
eine Wasserpumpe (80) für die Wasserversorgung der Ausblickscheibe (26) angeordnet sind, wobei der Getriebemotor zweckmäßigerweise am oberen Gehäusesteg angeflanscht ist und eine
Kurbelscheibe (27) direkt auf der, den oberen Gehäusesteg
durchdringenden Antriebswelle des Getriebemotors fest aufgebracht ist und wobei die Kurbelscheibe in einer im oberen
Gehäusesteg eingeformten Versenkung untergebracht ist und an
ihrem Umfang eine Einbuchtung oder dgl. zwecks Betätigung
eines Microschalters aufweist, um den Stillstand des Getriebemotors bzw. der Kurbelscheibe in der Ruheschwenkstellung
des Scheibenwischerblattes (34) über der Mulde (58) der Ausblickscheibe (26) nach Abstellen des Scheibenwischerantriebes einzuleiten, wobei das Abstellen des Antriebes die sofortige Außerbetriebsetzung des Hubmagneten (112a) zur Folge hat,
während die Stromunterbrechung zum Getriebemotor durch die Betätigung des Microschalters erfolgt (Fig.1 u. 3)

8) VORWÄRTSBLICKSPIEGEL nach mind. ein. der vorhergeh. Ansprüche
   d a d u r c h   g e k e n n z e i c h n e t ,
   daß das Gehäuse (11) auf der Oberseite eine seitliche Umrandung (90) aufweist und ein Vordachboden (83) mit einem kreisbogenförmigen Schlitz (117) für die Durchführung des abgewinkelten Schwenkendes des Wischbügels (33) über der Ausblickscheibe (26) am Gehäuserahmen (60) angeformt ist, wobei der
   äußere Rand des Vordachbodens stirnseitig bündig zur Gehäuseumrandung hochgezogen ist und daß der oberhalb der Spiegeleinheit (20) angeordnete Antriebsmechanismus des Scheibenwischerblattes (34) von einem Gehäusedeckel (39) abgedeckt ist,
   wobei der Gehäusedeckel, mit dem Vordachboden ein doppelwandiges Vordach über der Ausblickscheibe bildend, ebenfalls
   über die Ausblickscheibe hinweggezogen ist und seitlich bündig mit seiner Umrandung auf der Umrandung des Gehäuses und
   des Vordachbodens aufliegt und über dem Rückblickspiegel (10)
   ein kleines Vordach bildet, wobei jedoch das vom Fahrer (3)
   aus durch die Windschutzscheibe (101) des Kraftfahrzeuges
   (13) sichtbare Deckenteil (82) des Gehäuserahmens von der
   Abdeckung durch den Gehäusedeckel möglichst weitgehend ausgenommen ist und entsprechend dem Einblickwinkel eines groß
   gewachsenen Fahrers schräg nach unten verläuft, so daß der
   Ausblick über das Deckenteil hinweg nicht unnötig eingeschränkt ist, jedoch die ganze, zweckmäßigerweise rechtwinklig oder annähernd rechtwinklig ausgebildete Spiegelfläche
   des Spiegeleinsatzes (1) einsehbar ist und daß auf der Unterseite des Vordachbodens ein keilförmig ausgebildeter Luftstromabweiser (168) angeformt ist (Fig.1, 2 u. 3)

0190677

9) VORWÄRTSBLICKSPIEGEL nach Anspruch 7 u. 8
d a d u r c h   g e k e n n z e i c h n e t ,
daß im Gehäusedeckel (39) der Spiegeleinheit (20) Schlitze
(158) oder entsprechende Öffnungen quer über dem kreisbogenförmigen Schlitz (117) des Vordachbodens (83) angebracht sind
und daß im Vordachboden direkt über der Ausblickscheibe (26)
eine Auffangwanne (159) für Regenwasser eingeformt ist, wobei
der Boden (187) der Auffangwanne auf der Oberseite der zweckmäßigerweise zylinderförmig oder kegelförmig gewölbten Ausblickscheibe aufliegt, während die Außenwandung (188) der
Wanne außen bündig zur Scheibe anschließt und die Innenwandung (86) der Wanne, gerade verlaufend, stirnseitig bündig
bis zur Umrandung (90) des Gehäuses (11) hochgezogen ist und
daß am Grund der Auffangwanne eine oder mehrere Auslaufbohrungen (171) oder entsprechende Schlitze oder Öffnungen und
zweckmäßigerweise etwas darüberliegend auch eine Überlauföffnung zur Mulde (58) hin nach außen bis vor die Ausblickscheibe hindurchgeführt sind, wobei zwischen dem Boden der
Auffangwanne und dem durch die Außenwandung der Wanne hochgezogenen, eigentlichen Vordachboden (83) ein Überlaufschlitz
(190) in der Innenwandung (86) der Auffangwanne vorgesehen
ist, so daß überschüssiges Regenwasser auf ein vom Gehäusedeckel (39) abgedecktes Deckenteil (84) des Gehäuserahmens
(60) überlaufen kann und daß in einer vom Gehäuserahmen gebildeten Wandung, zweckmäßigerweise zwischen der Ausblickscheibe und dem Ausblickspiegeleinsatz (2), ein Ablaufloch
(137a) vertikal nach unten hindurchgeführt ist, so daß das
übergelaufene Regenwasser ungenutzt nach unten ablaufen kann
und daß für die Wasserzuführung mittels der Wasserpumpe (80)
zweckmäßigerweise ein Rückschlagventil (169) in die Innenwandung der Auffangwanne eingesetzt ist, wobei am tiefsten
Punkt der Wanne eine Rille (189) vom Rückschlagventil bis zu
einer schräg nach unten gerichteten Auslaufbohrung (171) bzw.
einem gegebenenfalls vertikal angebrachten Auslaufschlitz in
den Wannenboden eingeformt ist und daß zwecks Abweisung von
Spritzwasser kreisbogenförmig um die Schwenkachse (32) des
Wischbügels verlaufende, bis knapp unter den Wischbügel (33)
hochgezogene Rippen (97) auf dem entsprechenden Deckenteil
(84) des Gehäuserahmens angeformt sind, wobei zwischen den
Rippen ein Schutzwall ähnlich einer Bürste mit nach oben gerichteten, bis zur Wandung des Gehäusedeckels reichenden
Borsten angebracht sein kann (Fig.1, 2 u. 6)

10) VORWÄRTSBLICKSPIEGEL nach Anspruch 8
d a d u r c h   g e k e n n z e i c h n e t ,
daß stirnseitig bündig zur Gehäuseumrandung (90) gleichverlaufende Umrandungen (161) auf dem oberen Gehäusesteg (42)
und unter dem Gehäusedeckel (39) angeformt sind, wobei die
Umrandungen plan aufeinander aufliegen, so daß zwischen dem
oberen Gehäusesteg und dem Gehäusedeckel eine Wasserkammer
(162) gebildet ist und daß über der Wasserkammer oben bündig
zum Gehäusedeckel eine Klappe (160) mit einer angeformten
Taste (184) in eine entsprechende Aussparung (192) des Gehäusedeckels mit etwas seitlichem Spiel eingesetzt ist, wobei die Klappe zweckmäßigerweise als beidarmig wirkender Hebel ausgebildet schwenkbar um eine Achse (177) an einem, auf
dem oberen Gehäusesteg befestigten Lagerbock (175) gelagert
ist und daß an dem einen Hebelarm der Klappe eine das Schliessen der Klappe bewirkende Druckfeder (176) und am anderen Hebelarm der Klappe ein das Öffnen der Klappe bewirkender,
drückend eingesetzter Hubmagnet (178) wirksam zwischen dem
oberen Gehäusesteg und der Klappe angeordnet sind, wobei der
mit einem Zentralgewindeansatz ausgestattete Hubmagnet zwischen den beiden Gehäusestegen (42 u. 43) untergebracht ist
und mit seinem Zentralgewindeansatz bzw. seiner Druckstange
durch den oberen Gehäusesteg hindurchgeführt ist und wobei
übliche Vorkehrungen zwecks Abdichtung der Durchführung vorgesehen sind (Fig.1, 4 u. 5)

11) VORWÄRTSBLICKSPIEGEL nach Anspruch 10
d a d u r c h   g e k e n n z e i c h n e t ,
daß am Grund der Wasserkammer (162) eine Ablauföffnung (163)
vorgesehen ist und daß über der Ablauföffnung ein Überlauf
(164) zum Wasserbehälter (77, 78, 165) und über dem Überlauf
Überlaufschlitze (182) angebracht sind, wobei die Ablauföffnung (163) durch eine Aussparung in der Gehäuseumrandung (90)
gebildet ist, während der Überlauf durch ein am oberen Gehäusesteg (42) angeformtes, stirnseitig bündig zur Gehäuseumrandung hochgezogenes Auge mit zentrisch zum Auge angebrachter
Gewindebohrung gebildet ist und wobei die Überlaufschlitze

in der seitlichen Umrandung des Gehäusedeckels (39) angebracht sind (Fig.1, 4, 4a, u. 5)

2) VORWÄRTSBLICKSPIEGEL nach Anspruch 1 u. 3
d a d u r c h   g e k e n n z e i c h n e t ,
daß parallel zur Schwenkachse (32) des Scheibenwischerblattes (34) versetzt eine weitere Lagerbohrung vertikal durch
die Wandung (76) des Gehäuserahmens (60) hindurchgeführt ist,
wobei durch diese Lagerbohrung eine nach oben ragende Achse
(18) eines entsprechend den räumlichen Verhältnissen gekröpften Halters (12c) zur Befestigung der Spiegeleinheit (20) am
Kraftfahrzeug (13) hindurchgeführt ist und daß die Schwenklage der Spiegeleinheit um diese Achse, sowie die Gebrauchslage derselben durch einen Gelenkhebel (21) bestimmt ist, wobei der Gelenkhebel, gegebenenfalls in seiner Länge einstellbar ausgeführt, einerseits an einer vor dem Fahrer (3)
schwenkbar gelagerten Türe (103) und andererseits am unteren
Gehäusesteg (43) der Spiegeleinheit horizontal schwenkbar gelagert ist und wobei die Gelenkverbindungen des Hebels in bekannter Weise so ausgebildet sind, daß sie auch eine gering
erforderliche Schwenkbarkeit des Hebels in vertikaler Richtung zulassen (Fig.1)

3) VORWÄRTSBLICKSPIEGEL nach Anspruch 12
d a d u r c h   g e k e n n z e i c h n e t ,
daß der Halter (12c) eine parallel zu seiner Achse (18) versetzte, vertikal nach unten ragende Schwenkachse (17) aufweist und über dieselbe in einem seitlich am vorderen Kotflügel (107) des Kraftfahrzeuges befestigten, als Gußteil
ausgebildeten Lagergehäuse (19a) schwenkbar gelagert ist, wobei seine die Gebrauchs- und Ausschwenklage der Spiegeleinheit bestimmenden Endschwenkstellungen in üblicher Weise
durch eine zwischen Halter und Lagergehäuse angebrachte Ringnut (45) im Zusammenwirken mit einem axial in die Ringnut hineinragenden Anschlagbolzen (44) bestimmt sind und wobei in
den Endschwenkstellungen eine übliche Einrastvorkehrung (46,
155) zwischen Halter und Lagergehäuse getroffen ist (Fig.1
u. 7)

14) VORWÄRTSBLICKSPIEGEL nach Anspruch 12 u. 13
    d a d u r c h   g e k e n n z e i c h n e t ,
    daß für das Aus- u. Einschwenken der Spiegeleinheit bzw. des
    Halters (12c) ein Getriebemotor (140) in einem entsprechend
    ausgebildeten Lagergehäuse (19a) für die Lagerung der Schwenkachse (17) mit untergebracht ist und daß der Getriebemotor
    über einen üblichen Kurbeltrieb mit einer auf seiner Antriebswelle fest aufgebrachten Kurbelscheibe (141) über einen Kurbelbolzen (142), sowie eine Pleuelstange (143) und über einen
    Schwenkbolzen (144) mit einer lose schwenkbar auf der Schwenkachse (17) gelagerten Schwenkscheibe (145) in Wirkverbindung
    steht, wobei die Schwenkscheibe über eine kreisbogenförmig um
    ihre Längsachse verlaufende Ringnut (146) und einen axial in
    die Ringnut hineinragenden Mitnehmerbolzen (147) mit einem
    fest auf der Schwenkachse aufgebrachten Hebel (148) im Eingriff steht und daß die Schwenkamplitude (144.1- 144.2) des
    auf der Schwenkscheibe befestigten Schwenkbolzens (144) durch
    zwei am Umfang der Kurbelscheibe (141) aufgebrachte, um 180°
    versetzte Einbuchtungen (151 u. 152) oder dgl. im Zusammenwirken mit einem im Lagergehäuse betätigbar durch die Einbuchtungen angebrachten Microschalter (149) in zwei gleich große,
    entgegengesetzt gerichtete Schwenkamplituden (144- 144.1 u.
    144- 144.2) unterteilt ist, wobei die Ringnut (146) gerade so
    bemessen und zum Mitnehmerbolzen (147) angeordnet ist, daß
    der Halter (12c) in der, die Ruheschwenkstellung (144) bildenden Mittellage des Schwenkbolzens zwischen seinen die Gebrauchs- und Ausschwenklage der Spiegeleinheit bestimmenden
    Endschwenkstellungen (12c u. 12c.1) frei beweglich ist, während die ganze Schwenkamplitude (144.1- 144.2) des Schwenkbolzens über den Kurbeltrieb so ausgelegt ist, daß der Halter
    über die Ringnut und den Mitnehmerbolzen zwischen seinen Endschwenkstellungen hin und her schwenkbar ist und daß ein weiterer Microschalter (150) im Lagergehäuse so angeordnet ist,
    daß er durch die Pleuelstange (143) des Kurbeltriebes in einer der beiden, durch die Einbuchtungen (151 u. 152) der Kurbelscheibe bestimmten Ruheschwenkstellungen (142 oder 142.0)
    des Kurbelbolzens (142) betätigbar ist (Fig.7 u. 8)

15) VORWÄRTSBLICKSPIEGEL nach Anspruch 4
d a d u r c h   g e k e n n z e i c h n e t ,
daß die Schwenkbarkeit des Scheibenwischerblattes (34) durch
am Wischhebel (81a, 81a') gebildete Anschläge auf ein erforderliches Minimum eingeschränkt und durch Dämpfungselemente,
wie beispielsweise Weichgummi, Schaumgummi oder Federelemente
gedämpft ist, um ein Flattern des Scheibenwischerblattes aufgrund des Fahrtwindes in dessen Ruheschwenkstellung (R) über
der Mulde (58) der Ausblickscheibe (26) zu verhindern (Fig.2)

16) VORWÄRTSBLICKSPIEGEL nach Anspruch 7 u. 10
d a d u r c h   g e k e n n z e i c h n e t ,
daß der Wasserbehälter (77) in einer im unteren Gehäusesteg
(43) eingeformten Vertiefung (173) eingesetzt ist, wobei am
Boden des Behälters oder in der Vertiefung radial nach innen
verlaufende Rillen oder entsprechende Erhöhungen angeformt
sind, damit aus dem Behälter überlaufendes Wasser unter dem
Behälter nach innen bis zu einem zentrisch in der Vertiefung
angebrachten Ablaufloch (174) gelangen und von dort ablaufen
kann und daß der Wasserbehälter einen abnehmbaren Deckel (78)
mit einem in den Deckel eingesetzten, entsprechend lang ausgebildeten Ansaugrohr (167) aufweist und durch einen, aus
einem Federstahlband gefertigten, am oberen Gehäusesteg gegebenenfalls horizontal schwenkbar und einhängbar befestigten
Niederhalter (79) über den Deckel in die Vertiefung gedrückt
ist und daß der Deckel eine angeformte oder aufgesetzte Kappe (165) mit einem Entlüftungsloch (166) und einem Schlauchanschlußnippel für die Schlauchverbindung zur Wasserkammer
(162) aufweist und daß die Wasserpumpe (80) von außen gesehen hinter dem Wasserbehälter bzw. hinter dem Rückblickspiegel (10) auf dem unteren Gehäusesteg befestigt ist und daß
der Hubmagnet (112a) ebenfalls auf dem unteren Gehäusesteg
befestigt ist und daß in der zwecks Unterbringung der Kurbelscheibe (27) im oberen Gehäusesteg (42) eingeformten Versenkung außen eine kreisringförmige Vertiefung mit einer oder
mehreren Ablauföffnungen eingeformt ist, damit evtl. auf den
oberen Gehäusesteg gelangtes Spritzwasser nach unten auf den
unteren Gehäusesteg ablaufen kann, wobei ein leichtes Gefälle im unteren Gehäusesteg zur Vertiefung (173) hin vorgesehen ist, damit ein Ablauf nach außen durch das Ablaufloch (174) unter dem Wasserbehälter ermöglicht ist (Fig.1 u. 3)

17) VORWÄRTSBLICKSPIEGEL nach Anspruch 8
d a d u r c h   g e k e n n z e i c h n e t ,
daß an dem, vom Gehäusedeckel (39) nicht abgedeckten Deckenteil (82) des Gehäuserahmens (60) ebenfalls ein kleines Vordach ähnlich dem vom Gehäusedeckel über dem Rückblickspiegel
(10) gebildeten Vordach über der Einblickscheibe (25) angeformt ist, wobei über der Einblickscheibe eine Mulde in Längsrichtung der Scheibe in die Oberseite des Vordaches eingeformt
ist und wobei vom Grund der Mulde aus Löcher oder entsprechende Öffnungen bis unmittelbar vor die Scheibe vertikal durch
das Vordach hindurchgeführt sind und daß in derselben Weise
auch über dem Rückblickspiegel der Spiegeleinheit eine Mulde
mit entsprechenden Durchbrüchen in dessen vom Gehäusedeckel
gebildeten Vordach eingeformt ist (Fig.1 u. 3)

18) VORWÄRTSBLICKSPIEGEL nach mind. ein. der vorhergeh. Ansprüche
d a d u r c h   g e k e n n z e i c h n e t ,
daß auf der Außenseite der Spiegeleinheit (20) zwei nach unten abklappbare und verschließbare Deckel (37) für die Abdek-
kung des Antriebsraumes (170) zwischen den Gehäusestegen (42
u. 43) angeordnet sind, wobei ein Deckel vorne auf der Vorwärtsblickspiegelseite und der andere Deckel hinten auf der
Rückblickspiegelseite jeweils schwenkbar am unteren Gehäusesteg (43) befestigt ist und daß am vorderen Deckel auf der
Innenseite die Anschlußklemmen für die elektrische Verdrahtung, sowie sichtbar von außen gegebenenfalls eine zusätzliche Blinkleuchte und eine die Stillstandszeit des Kraftfahrzeuges bis zu einer bestimmten Maximaldauer anzeigende Parkuhr anmontiert sind, während der hintere Deckel, verschließbar ausgeführt, den vorderen Deckel seitlich überlappt und
somit mitverschließt und für die Herausnahme des Wasserbehälters (77) ausgelegt ist und daß auf der Innenseite der
Spiegeleinheit entweder eine abschließende Wandung zwischen
den Gehäusestegen mit an das Gehäuse (11) angeformt oder ein
Deckel aufgeschraubt ist, wobei der Deckel dann auf der Innenseite ebenfalls elektrischen Zubehör aufmontiert haben kann
und beispielsweise für den Stromanschluß bzw. die Kabelverbindung zum Kraftfahrzeug vorgesehen ist

19) VORWÄRTSBLICKSPIEGEL nach Anspruch 7
d a d u r c h   g e k e n n z e i c h n e t ,
daß das Gehäuse (11) und der Gehäusedeckel (39) der Spiegeleinheit (20) im Druckgußverfahren aus einer Aluminiumgußlegierung, wie beispielsweise GD-AlMg 9 oder im Spritzgußverfahren aus thermoplastischem Kunststoff, wie beispielsweise
Polyamid oder Polyurethan gefertigt ist

20) VORWÄRTSBLICKSPIEGEL nach Anspruch 6
d a d u r c h   g e k e n n z e i c h n e t ,
daß die schwenkbar über die Schwenkwelle (125) in den Gehäusestegen (42 u. 43) gelagerte Klinke (124) in Anschlagstellung (130) zum Wischbügel (33) stehend mit ihrer Längsachse
in etwa senkrecht zur Längsachse des Wischbügels angeordnet
ist und daß die Anschlagfläche (130) des Wischbügels bzw.
der Klinke eine zur Schwenkachse (32) des Wischbügels hin
gerichtete Schräge aufweist und daß für die Schwenkbegrenzung des drehfest über die Schwenkwelle mit der Klinke in
Wirkverbindung stehenden Ausklinkhebels (125) in der Anschlagstellung der Klinke eine Anschlagschraube (191) vorgesehen
ist und daß über die Anschlagschraube die das Ausschwenken
der Klinke aus dem Schwenkbereich des Wischbügels bewirkende
Druckfeder (113a) gestülpt ist, wobei das Mutterteil der Anschlagschraube auf dem unteren Gehäusesteg befestigt ist
(Fig.1)

0190677

**Fig.1**

**Fig.2**

**Fig.3**

0190677

Fig.4

Fig.4a

Fig.5

Fig.6

Fig.6a

0190677

_Fig. 7_

_Fig.8_